(19) Europäisches Patentamt
European Patent Office
Office européen des brevets

(11) **EP 2 174 025 B1**

(12) **EUROPÄISCHE PATENTSCHRIFT**

(45) Veröffentlichungstag und Bekanntmachung des Hinweises auf die Patenterteilung:
**20.06.2012 Patentblatt 2012/25**

(21) Anmeldenummer: **08784726.5**

(22) Anmeldetag: **11.07.2008**

(51) Int Cl.:
*F16B 33/02* *(2006.01)*

(86) Internationale Anmeldenummer:
**PCT/EP2008/005687**

(87) Internationale Veröffentlichungsnummer:
**WO 2009/015754 (05.02.2009 Gazette 2009/06)**

(54) **ERZEUGUNG EINER PLANMÄSSIGEN EIGENSPANNUNGSVERTEILUNG IN BAUTEILEN DURCH EINBRINGEN VON SCHRAUBEN ODER GEWINDESTANGEN MIT SICH IN LÄNGSRICHTUNG VARIABEL VERÄNDERNDER GEWINDESTEIGUNG**

PRODUCTION OF A PLANNED DISTRIBUTION OF INTERNAL STRESS IN COMPONENTS BY THE INSERTION OF SCREWS OR THREADED RODS HAVING A THREAD PITCH THAT IS VARIABLE IN THE LONGITUDINAL DIRECTION

GÉNÉRATION D'UNE RÉPARTITION PLANIFIÉE DE LA CONTRAINTE PROPRE DANS DES ÉLÉMENTS PAR INSERTION DE VIS OU DE TIGES FILETÉES À PAS VARIABLE EN SENS LONGITUDINAL

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **27.07.2007 DE 102007035183**

(43) Veröffentlichungstag der Anmeldung:
**14.04.2010 Patentblatt 2010/15**

(73) Patentinhaber: **Ludwig Hettich & Co.**
**78713 Schramberg-Sulgen (DE)**

(72) Erfinder: **HETTICH, Ulrich**
**78713 Schramberg (DE)**

(74) Vertreter: **Lucke, Andreas**
**Boehmert & Boehmert**
**Pettenkoferstrasse 20-22**
**80336 München (DE)**

(56) Entgegenhaltungen:
**US-A- 4 842 464      US-A- 4 956 888**
**US-A1- 2005 207 868**

**Beschreibung**

Die vorliegende Erfindung betrifft ein Verfahren zur Armierung eines Bauteils und/oder zum Einleiten von Kraft in ein Bauteil unter Verwendung einer Schraube oder einer Gewindestange.. Ferner betrifft sie ein Verfahren zur Konstruktion einer Schraube oder Gewindestange mit zugehörigem Computerprogramm. Schließlich betrifft die vorliegende Erfindung eine Schraube oder Gewindestange.

Im Stand der Technik werden Schrauben und Gewindestangen unter anderem verwendet, um Bauteile zu verbinden, Lasten in Bauteile ein- oder auszuleiten, oder um Bauteile zu armieren. Bei all diesen Anwendungen hat der Verlauf der Verbundspannung in der Verbindung einen entscheidenden Einfluß über die Höhe des Lastniveaus, das durch diese Verbindung erreicht werden kann. Der Verlauf der Verbundspannung wiederum ist abhängig von den gepaarten Werkstoffen, den Dehnsteifigkeiten von Bauteil und Schraube bzw. Gewindestange und der Einbettungslänge. Maßgebend für die Versagenslast ist in der Regel die maximal auftretende Verbundspannung, die sich im Bereich der größten Dehnungsdifferenz zwischen Bauteil und Schraube bzw. Gewindestange einstellt.

US 4,842,464 und US 4,956,888 offenbaren eine Schraubverbindung zwischen einer Schraube und einer Mutter. Die Schraube hat ein Gewinde, bei dem sich die Gewindesteigung kontinuierlich in axialer Richtung ändert. Durch die Variation der Gewindesteigung bzw. Ganghöhe der Mutter wird diese an eine Dehnung der Schraube bzw. Stauchung der Mutter angepasst, die auftritt, wenn die Mutter fest angezogen ist. Ziel der Variation der Ganghöhe der Mutter ist, die Last gleichmäßig über die Gewindegänge der Schraube zu verteilen.

Der vorliegenden Erfindung liegt die Aufgabe zu Grunde, derartige Verbindungen zwischen Bauteil und Schraube bzw. Gewindestange zu verbessern, so daß ein sicherer, widerstandsfähiger Verbund bei höheren Belastungen erreicht werden kann, als dies beim Stand der Technik möglich ist.

Diese Aufgabe wird durch ein Verfahren nach Anspruch 1, 2 oder 8 und eine Schraube oder Gewindestange nach Anspruch 10 oder 13 gelöst. Vorteilhafterweise Weiterbildungen sind in den abhängigen Ansprüchen angegeben.

Gemäß einem Aspekt der Erfindung wird ein Verfahren zur Armierung eines Bauteils und/oder zum Einleiten von Kraft in ein Bauteil unter Verwendung einer Schraube oder Gewindestange angegeben, wobei die Schraube bzw. Gewindestange ein Gewinde mit variabler Gewindesteigung hat, so daß in dem Bauteil eine Eigenspannungsverteilung erzeugt wird, die geeignet ist, mindestens ein Maximum in der Verbundspannung zwischen der Schraube bzw. Gewindestange und dem Bauteil, welche unter Belastung des Bauteils auftritt, zu verringern. Die Schraube bzw. Gewindestange kann dabei selbstschneidend sein.

Durch die veränderliche Gewindesteigung ergibt sich beim Einschrauben der Schraube in das Bauteil eine Vorspannung sowohl des Bauteils als auch der Schraube bzw. Gewindestange, die in der vorliegenden Schrift als "Eigenspannung" bezeichnet wird. Die Eigenspannung ist also eine Spannung, die sich allein durch die veränderliche Gewindesteigung, ohne jegliche äußere Last auf das Bauteil ergibt. Die Eigenspannung erzeugt insbesondere eine Verbundspannung $\tau_{ES}$ zwischen der Schraube bzw. Gewindestange und dem (noch nicht belasteten) Bauteil.

Da diese Verbundspannung $\tau_{ES}$ der Eigenspannung wiederum nur auf die veränderliche Gewindesteigung zurückzuführen ist, ist sie durch geeignete Konstruktion des Gewindes im gewissen Rahmen frei vorgebbar. Gemäß der vorliegenden Erfindung wird das Gewinde dann so konstruiert, daß die Verbundspannung $\tau_{ES}$ der Eigenspannung einen Verlauf hat, daß sie der "normalen" Verbundspannung $\tau$, die sich durch die Belastung des Bauteils ergibt, zumindest abschnittsweise entgegengesetzt ist. Dadurch können die Maxima in der effektiven oder kombinierten Verbundspannung, die sich aus einer Überlagerung von $\tau$ und $\tau_{ES}$ ergibt, im Vergleich zu den Maxima von $\tau$ allein, erheblich abgesenkt werden, so daß ein Versagen des Verbundes erst bei viel höheren Belastungen auftritt.

Die konkrete Form des Gewindes muß wie gesagt an den zu erwartenden Spannungsverlauf im Verbund bei Belastung angepaßt werden. Dies kann auf verschiedene Weisen praktisch umgesetzt werden, die sich durch den Grad ihrer Komplexität unterscheiden.

Zunächst ist es möglich, für eine spezielle geplante Anwendung das geeignete Gewinde zu konstruieren. Wenn beispielsweise eine Hallendachkonstruktion aus Holz entworfen wird, werden bei den statischen Berechnungen Armierungen in Holzträgem, beispielsweise Brettschichtträgern, berücksichtigt. Bei einer Anwendung der Erfindung könnte dann für eine jede Armierungsschraube die unter Belastung auftretende Verbundspannung ermittelt werden, beispielsweise durch analytische Berechnungen, wie sie unten näher erläutert werden, oder durch Computersimulationen mit Finite-Elemente-Modellen (FEM). Dann kann für eine jede lokal auftretende Spannungsverteilung ein dazu nahezu optimal passendes Gewinde konstruiert werden, durch welches Spitzen in der Verbundspannung abgesenkt werden, und das Potential der Erfindung optimal ausgeschöpft werden. Jedoch müßten dazu individuell konstruierte Armierungsschrauben in kleinen Stückzahlen hergestellt werden, was die Kosten der Armierungsschrauben verglichen mit herkömmlichen Standard-Armierungsschrauben erhöht.

Eine weitere Umsetzung der Erfindung besteht darin, standarisierte Schrauben oder Gewindestangen für Standardanwendungen bereitzustellen. Beispielsweise verlaufen die Verbundspannungen für Verbindungen zur Lasteinleitung in der Regel hyperbolisch, und sie sind im Prinzip für alle Schraubenverbindungen ähnlich. Die maximalen Verbundspannungen treten dabei in der Regel am Lasteinleitungspunkt auf, das heißt am Bauteilrand. Bei gleicher Dehnsteifigkeit und kurzen Verbundlängen kann ein weiteres Maximum der Verbundspannung im Bereich des führenden Endes der Armierungsschraube auftreten. Da die Verbundspannungsverläufe in unterschiedlichen Anwendungen ähnlich sind, ist es möglich für bestimmte Werkstoffkombinationen (beispielsweise Stahl/Holz, Stahl/Leichtmetall und Stahl/Kunststoff) Standardgewindeformen zu entwerfen, die möglicherweise nicht in allen Anwendungen das volle Potential der Erfindung ausschöpfen, jedoch grundsätzlich zu einer kombinierten Verbundspannung führen, deren Maxima im Vergleich zu einer Verwendung eines herkömmlichen Gewindes mit konstanter Gewindesteigung wesentlich verringert sind.

Ein Beispiel für eine vorteilhafte Gestaltung eines Standardgewindes für die Lasteinleitung sieht einen Verbund-Gewindeabschnitt vor, der in ein Bauteil einschraubbar ist, um mit dem Bauteil einen Verbund zu bilden, und der ein erstes, beim Einschrauben führendes Ende und ein zweites Ende hat, wobei die Gewindesteigung in der dem zweiten Ende benachbarten Hälfte des Verbund-Gewindeabschnittes ein erstes lokales Extremum aufweist. Bei diesem ersten lokalen Extremum handelt es sich um ein Maximum, wenn eine Drucklast in das Bauteil eingeleitet werden soll, und um ein Minimum, wenn eine Zuglast eingeleitete werden soll. Durch dieses lokalen Extremum in der Nähe des zweiten Endes des Verbundes, das heißt in der Nähe des Randes des Bauteils, läßt sich das bekannte Maximum der Verbundspannung unter Belastung am zweiten Ende des Verbund-Gewindeabschnitts verringern, wie unten anhand eines Ausführungsbeispiels näher erläutert wird.

Der oben genannte Verbund-Gewindeabschnitt ist der Teil des Gewindes, der zum Bilden des Verbundes bestimmt ist, und über dessen Länge die Gewindeform überhaupt wirksam ist. Wenn die Länge des Verbund-Gewindeabschnitts auf eins normiert ist, befindet sich das genannte erste lokale Extremum vorzugsweise in einem Abstand von 0,6 bis 0,9, und vorzugsweise von 0,7 bis 0,85 vom ersten Ende.

Ferner kann die Gewindesteigung ein zweites lokales Extremum aufweisen, welches in der dem ersten Ende benachbarten Hälfte liegt und eine Krümmung aufweist, die derjenigen des ersten lokalen Extremums entgegengesetzt ist. Wenn das erste lokale Extremum ein Maximum ist, ist somit das zweite lokale Extremum ein Minimum und umgekehrt. Durch dieses zweite lokale Extremum kann ein weiteres Maximum in der Verbundspannung durch Belastung kompensiert werden, welches am ersten Ende des Verbund-Gewindeabschnitts, das heißt im Bereich des führenden Endes der Schraube oder Gewindestange vorliegt.

Das zweite lokale Extremum befindet sich vorzugsweise in einem Abstand von 0,05 bis 0,4 und besonders vorzugsweise von 0,1 bis 0,3 vom ersten Ende des Verbund-Gewindeabschnittes.

Nach einer vorteilhaften Weiterbildung des Verfahrens der Erfindung wird im Falle der Armierung eine Schraube oder Gewindestange verwendet, bei der die Gewindesteigung in einem an das erste Ende angrenzenden Abschnitt ausgehend von einem Wert $p_0$ am ersten Ende um einen Wert $\Delta p$ abfällt, in einem mittleren Abschnitt unterhalb von $p_0 - \Delta p$ bleibt und in einem an das zweite Ende angrenzenden Abschnitt wieder über den Wert $p_0 - \Delta p$ ansteigt. Grob gesprochen entspricht dies einem Gewindeverlauf, bei dem die Gewindesteigung am Anfang und am Ende des Verbund-Gewindeabschnitts hoch und in einem dazwischen liegenden Abschnitt gering ist, was bedeutet, daß die Gewindeflanken in diesem mittleren Abschnitt näher beieinander liegen und daß das Bauteil in diesem mittleren Abschnitt daher komprimiert wird. Diese qualitative Veranschaulichung wird unten anhand konkreter Berechnungen präzisiert. Durch eine derartige Gewindeform kann im Inneren des armierten Bauteils ein nahezu konstanter Druck erzeugt werden, der für viele Anwendungen vorteilhaft ist.

Wenn man wiederum annimmt, daß die Länge des Verbund-Gewindeabschnittes auf eins normiert ist, hat der erste und/oder der zweite Abschnitt vorzugsweise eine Länge von zwischen 0,07 und 0,35, besonders vorzugsweise zwischen 0,1 und 0,3 und insbesondere zwischen 0,15 und 0,25.

Die Steigung im mittleren Abschnitt muß nicht konstant sein, aber sie sollte zum Erzeugen des erwünschten Effektes um weniger als $\pm$ 0,5 $\Delta p$, vorzugsweise um weniger als $\pm$ 0,3 $\Delta p$ variieren.

Ferner weichen die Gewindesteigungen am ersten und am zweiten Ende des Verbund-Gewindeabschnitts um weniger als 50%, vorzugsweise weniger als 30% und besonders vorzugsweise um weniger als 10% der gesamten Variation der Gewindesteigung im Verbund-Gewindeabschnitt voneinander ab. Bei bevorzugten Ausführungsformen liegen die Gewindesteigungen am ersten und zweiten Ende des Verbund-Gewindeabschnitts also relativ dicht beieinander, und in den unten gezeigten Ausführungsbeispielen sind sie sogar identisch.

Ein weiterer Aspekt der Erfindung betrifft ein Verfahren zum Befestigen eines ersten Teils an einem zweiten Teil mit Hilfe einer Schraube oder Gewindestange, bei dem die Schraube oder Gewindestange eine Gewindesteigung hat, die in Längsrichtung der Schraube bzw. Gewindestange variiert, wobei die Variation der Gewindesteigung so bemessen ist, daß die Spannungsverteilung, die sich bei Festziehen der Schraube im zweiten Teil ergibt, gleichförmiger ist als bei Verwendung einer Schraube mit konstanter Ganghöhe und gleichem Befestigungsdruck. Bei dieser Ausführung der Erfindung geht es also nicht darum, Verbundspannungen bei äußerer Belastung abzubauen, sondern die Spannungsverteilung, die sich durch das Festziehen der Schraube im zweiten Teil ergibt durch Überlagerung einer geeigneten Eigenspannungsverteilung gleichförmiger zu gestalten.

Eine vorteilhafte Anwendung dieses Verfahrens besteht beispielsweise in der Verbindung von Leichtmetallteilen, insbesondere Teilen, die Aluminium oder Magnesium enthalten. Zum Beispiel könnte mit diesem Verfahren ein Zylinderkopf an einem Motorblock festgeschraubt werden, der aus Leichtmetall besteht. Das Problem bei derartigen Verbindungen besteht darin, daß das Leichtmetall bei thermischer Belastung beginnt zu kriechen, wodurch die Verbindung geschwächt wird. Das Ausmaß des Kriechens hängt wiederum von der Stärke der Spannung ab. Wenn es also gelingt, mit dem erfindungsgemäßen Verfahren Spannungen im zweiten Teil oder Verbundspannungen gleichförmiger auszubilden, als mit herkömmlichen Schrauben, kann auch der Kriecheffekt wesentlich verringert werden.

Bei einer derartigen Anwendung würde es sich jedenfalls lohnen, die Schraube exakt für die geplante Anwendung zu konstruieren, da sie aufgrund der hohen Stückzahl hergestellter Motoren ebenfalls in hohen Stückzahlen hergestellt würden, was den Aufwand des Ermittelns der Spannungsverteilung und der Konstruktion der Schraube wirtschaftlich macht.

Weitere Vorteile und Merkmale der vorliegenden Erfindung ergeben sich aus der folgenden Beschreibung, in der die Erfindung anhand von Ausführungsbeispielen unter Bezugnahme auf die beigefügten Figuren näher erläutert wird. Darin zeigen:

| | |
|---|---|
| Figuren 1 und 2 | den Verlauf dreier typischer Verbundspannungen beim Einleiten einer Druck- bzw. Zuglast; |
| Figuren 3 und 4 | den Verlauf der Axialspannungen im Bauteil für die Fälle von Figur 1 bzw. 2; |
| Figuren 5 und 6 | den Dehnungsverlauf im Bauteil für die Fälle von Figur 1 bzw. Figur 2; |
| Figuren 7 und 8 | den Verlauf der Axialspannung der Schraube für die Fälle von Figur 1 bzw. Figur 2; |
| Figuren 9 und 10 | den Verlauf der Dehnung der Schraube für die Fälle von Figur 2 bzw. Figur 2; |
| Figuren 11 und 12 | Verläufe geeigneter Verbundspannungen, die durch Eigenspannung erzeugt werden, um die Maxima der Verbundspannungen von Figur 1 bzw. 2 zumindest teilweise zu kompensieren; |
| Figuren 13 und 14 | Verläufe von Dehnungszuständen des Gewindes aufgrund der Eigenspannung; |
| Figuren 15 und 16 | Verläufe von Axialspannungen im Bauteil aufgrund der Eigenspannung; |
| Figuren 17 und 18 | Verläufe von Axialspannungen im Bauteil, wie sie sich durch die Kombination von Eigenspannung und äußerer Last ergeben; |
| Figuren 19 und 20 | Verläufe von kombinierten Verbundspannungen, die sich durch eine Überlagerung der Verbundspannung durch eine äußere Last und der Verbundspannung durch die Eigenspannung ergeben; |
| Figuren 21 bis 26 | jeweils den Vergleich zwischen der kombinierten Verbundspannung und der Verbundspannung aus der Last allein; |
| Figuren 27 und 28 | die Verläufe von Gewindesteigungen, die zu den Verläufen der Eigenspannung führen, die den Figuren 11 bis 26 zugrunde liegen; |
| Figur 29 | fünf Ansatzfunktionen zur Konstruktion einer Eigenspannungsverteilung für einen Armierungsverbund; |
| Figur 30 | die erste Ableitung der Funktionen von Figur 29; |
| Figur 31 | fünf Eigenspannungszustände im Bauteil, wie sie sich aus den Funktionen von Figuren 29 und 30 ergeben; |
| Figur 32 | Verläufe von Dehnungen im Bauteil aufgrund der Eigenspannungszustände von Figur 31; |
| Figur 33 | Verläufe der Verbundspannungen durch die Eigenspannung für die Fälle von Figuren 29 bis 32, und |
| Figur 34 | die Verläufe der Gewindesteigungen, die die Verbundspannungen von Figur 33 erzeugen. |

Im folgenden sollen die Prinzipien der Erfindung anhand von zwei Ausführungsbeispielen im Detail erläutert werden. Das erste Ausführungsbeispiel betrifft die Einleitung einer Last über eine Schraube bzw. Gewindestange in ein Bauteil. Das zweite Ausführungsbeispiel betrifft die Armierung eines Bauteils mittels einer Schraube bzw. Gewindestange. Der Einfachheit halber wird im Folgenden nur auf eine "Schraube" bezug genommen, es versteht sich jedoch, daß alles hier Gesagte ebenso für eine Gewindestange gilt.

In beiden Ausführungsbeispielen werden in einer analytischen Berechnung die relevanten Größen Verbundspannung, Dehnung und Axialspannung der Schraube, Dehnung und Axialspannung des Bauteils und Schlupf zwischen Schraube und Bauteil in geschlossener Form ermittelt, wobei in der Berechnung das Bauteil im Verbund durch einen sogenannten Ersatzzylinder ersetzt wird. Ferner wird die Konstruktion eines Gewindes mit veränderlicher Gewindesteigung angegeben, welche geeignet ist, die auftretende Verbundspannung unter Belastung zumindest teilweise zu kompensieren.

Die folgende Herleitung und die Ausführungsbeispiele dienen jedoch nicht nur zur Erläuterung der Prinzipien der Erfindung. Vielmehr können in vielen Fällen bereits mit der im folgenden skizzierten analytischen geschlossenen Lösung für die Spannungsverhältnisse und der Konstruktion einer geeigneten Gewindesteigungsvariation in der Praxis Schrauben konstruiert werden, mit denen im Belastungsfall die maximal auftretenden Verbundspannungen ganz erheblich verringert werden können, wodurch die Versagenslast erhöht wird. Außerdem lassen sich bereits durch die folgende analytische Herleitung charakteristische Gewindeformen ermitteln, die bei typischen Lastsituationen, wie sie bei der Lasteinleitung und der Armierung auftreten, die auftretende Verbundspannung erheblich verringern.

Für komplexere Fälle, in denen eine geschlossene analytische Lösung nicht mehr möglich ist, beispielsweise aufgrund von geometrischen oder werkstoffbedingten Nichtlinearitäten, können die entsprechenden Ergebnisse mit numerischen Methoden hergeleitet werden, beispielsweise durch Finite-Elemente-Modelle (FEM).

Im folgenden wird zunächst der mathematische Apparat zum Ermitteln der Verbundspannung unter Last und zur Konstruktion geeigneter Schrauben mit veränderlicher Gewindesteigung vorgestellt. In den nachfolgenden Abschnitten 2 und 3 wird der mathematische Apparat verwendet, um für realistische Beispielfälle der Lasteinleitung bzw. der Armierung geeignete Gewindeformen zu konstruieren.

## 1. Mathematische Grundlagen

Bei der vorliegenden Erfindung ist eine Schraube mit einem Gewinde vorgesehen, dessen Steigung bzw. Ganghöhe in Längsrichtung der Schraube variiert. Der räumliche Verlauf des Schwerpunkts des Flankenquerschnitts des Gewindes wird durch die folgende Leitkurve parameterisiert:

$$LK\left(x\right) = \left( \begin{array}{c} f\left(x, \tau_b\left(x\right), \varepsilon_t\left(x\right)\right) \\ r\left(x\right) * \cos\left(x * \frac{l_b}{p0} * 2\pi\right) \\ r\left(x\right) * \sin\left(x * \frac{l_b}{p0} * 2\pi\right) \end{array} \right) \tag{1}$$

in der die folgenden Variablen verwendet werden:

$x$ : Normierte Länge mit $0 \leq x \leq 1$

$r(x)$ : Radius des Schwerpunkts des Flankenquerschnitts

$f\left(x, \tau_b\left(x\right), \varepsilon_t\left(x\right)\right)$: x-Koordinate der Leitkurve

$\tau_b\left(x\right)$ : Verlauf der Verbundspannung

$\varepsilon_t\left(x\right)$ : Verlauf der Bauteildehnung

In der obigen Darstellung entspricht die x-Koordinate der Längsrichtung der Schraube. Bei einer herkömmlichen Schraube mit konstanter Gewindesteigung wäre die Funktion f (x) der Leitkurve eine lineare Funktion von x. Bei der vorliegenden Erfindung hingegen wird der Verlauf von f so gewählt, daß durch eine variable Gewindesteigung der Schraube eine Eigenspannung im Verbund zwischen Bauteil und Schraube erzeugt wird, welche der unter Belastung auftretenden Verbundspannung in einer Weise entgegenwirkt, daß zumindest die Spitzen der Verbundspannung unter Belastung abgemildert werden. Die geeignete Funktion f ist daher nicht nur eine Funktion der Koordinate x, sondern auch abhängig von der unter Belastung zu erwartenden Verbundspannung $\tau_b$ (x) und der Dehnung $\varepsilon_t$ (x) des Bauteils

unter Belastung.

Kräfte zwischen dem Bauteil und der Schraube werden über Verbundspannungen $\tau_b$ übertragen, die allgemein wie folgt definiert sind:

$$dT = \tau_b \cdot d_s \cdot \pi \cdot dx \qquad\qquad (2)$$

wobei dT die infinitesimale Änderung der Axialkraft ist, die auf einen infinitesimalen Schraubenabschnitt dx wirkt, und $d_s \cdot \pi$ dem Umfang der Schraube entspricht. Ohne Verbundspannung $\tau_b$ könnte keine Last über die Schraube in das Bauteil eingeleitet werden, und nur durch die Verbundspannung kann im Falle einer Armierung Zug- oder Druckkraft innerhalb des Bauteils auf die Armierung übertragen werden.

In den folgenden Berechnungen wird das Bauteil durch einen Ersatzzylinder mit einem Durchmesser $d_t$ repräsentiert. Die Vorraussetzungen für die Bestimmung der Leitkurve sind dann:

- die Kenntnis des Belastungszustandes der Verbindung,

- die Kenntnis des Verbundgesetzes zwischen Gewinde und Bauteil, und

- die Kenntnis des Durchmessers $d_t$ des repräsentativen Ersatzzylinders.

Dabei können das Verbundgesetz und der Durchmesser $d_t$ des Ersatzzylinders gegebenenfalls in Experimenten ermittelt werden.

Die Abmessungen und Eigenschaften des Gewindes und des Bauteils werden wie folgt bezeichnet:

Tabelle 1:

| Geometrie | Gewinde | Bauteil |
|---|---|---|
| Durchmesser | $d_s$ | $d_t$ |
| Querschnittfläche | $A_s = \frac{\pi}{4}d_s^2$ | $A_t = \frac{\pi}{4}d_t^2 - A_s$ |
| E-Modul | $E_s$ | $E_t$ |
| Verbundlänge | $l_b$ | $l_b$ |

Ferner werden die folgenden Hilfsgrößen definiert:

$$u_s = \frac{\pi * d_s}{E_s * A_s} \;,$$

$$u_t = \frac{\pi * d_t}{E_t * A_t} \;,$$

$$u = u_s + u_t \;,$$

$$\varphi_A = \frac{A_t}{\pi * d_s} \;,$$

$$n = \frac{E_s}{E_t} \;,$$

und

$$\rho = \frac{d_z^2}{d_t^2 - d_o^2}$$

Die relative Verschiebung zwischen dem Gewinde und dem Bauteil, die man auch als "Schlupf" $\delta$ bezeichnet, entspricht dem Integral über die Differenz der Dehnungen $\varepsilon_S$ der Schraube und $\varepsilon_t$ des Bauteils:

$$\delta(x) = \int_0^x (\varepsilon_S(t) - \varepsilon_t(t))\, dt \qquad (3)$$

Die Dehnungsdifferenz $\varepsilon_S - \varepsilon_t$ stellt die erste Ableitung des Schlupfes $\delta$ dar, und die Verbundspannung $\tau_b$ entspricht der zweiten Ableitung des Schlupfes $\delta$:

$$\frac{d^2}{dx^2}\delta(x) = u * \tau(x) \qquad (4)$$

Mit einem lineareren Verbundgesetz:

$$\tau_b(\delta) = \tau_0 + k * \delta \qquad (5)$$
,

erhält die inhomogene Differentialrechnung 2. Ordnung des verschieblichen Verbundes folgende Form:

$$\frac{d^2}{dx^2}\delta(x) = u * k * \delta + u * \tau_0 \qquad (6)$$

Wenn die Koordinate x so gewählt wird, daß gilt: $0 \leq x \leq 1$, und ferner eine Hilfsgröße X definiert wird als:

$$\lambda = l_b * \sqrt{u * k} \qquad (7)$$

ergibt sich die folgende Lösung für den Schlupf $\delta(x)$:

$$\delta(x) = c1 * e^{\lambda * x} + c2 * e^{-\lambda * x} - \frac{\tau_0}{k} . \qquad (8)$$

Aus der Lösung für den Schlupf lassen sich die folgenden Zustandsgrößen des Verbundes bestimmen:

Dehnung der Schraube:

$$\varepsilon_s(x) = \lambda * \frac{u_s}{u * l_b} * \left(c1 * \left(e^{\lambda * x} - 1\right) - c2 * \left(e^{-\lambda * x} - 1\right)\right) + \varepsilon_{s0}$$

Dehnung des Bauteils:

$$\varepsilon_t(x) = \lambda * \frac{-u_t}{u * l_b} * \left(c1 * \left(e^{\lambda * x} - 1\right) - c2 * \left(e^{-\lambda * x} - 1\right)\right) + \varepsilon_{t0}$$

Axialspannung des Bauteils:

$$\sigma_t(x) = \varepsilon_t(x) * E_t$$

Axialspannung der Schraube:

$$\sigma_s(x) = \varepsilon_s(x) * E_s$$

Verbundspannung:

$$\tau_b(x) = \frac{\lambda^2}{u*l_b^2} * \left(c1 * e^{\lambda*x} + c2 * e^{-\lambda*x}\right)$$

wobei gilt :

$$\tau_b(x) = \frac{d}{dx}\sigma_t(x) * \varphi_{A}/l_b$$

Die obige Beschreibung der Verbundspannung $\tau_b$ und der Dehnungen $\varepsilon_S$ der Schraube und $\varepsilon_t$ des Bauteils gelten zunächst allgemein, unabhängig von der speziellen Ausbildung des Gewindes und beispielsweise auch in Fällen, in denen gar kein Gewinde verwendet wird, sondern z.B. ein Metallstab in ein Bauteil eingeklebt oder eingegossen ist. Durch die Verwendung einer Schraube mit einem Gewinde, dessen Steigung in Längsrichtung der Schraube variiert, läßt sich jedoch zusätzlich zu der unter Belastung auftretenden "üblichen" Verbundspannung $\tau_b$ eine zusätzliche Vorspannung im Bauteil und in der Schraube erzeugen, die hier als "Eigenspannung" bezeichnet wird. Die "Eigenspannung" ist eine Vorspannung, die sich allein durch die Variation der Gewindesteigung der Schraube ergibt und die bereits vorliegt, wenn die Schraube in das nicht belastete Bauteil eingeschraubt ist.

Die Eigenspannung erzeugt ihrerseits eine Verbundspannung $\tau_{ES}$, die im Belastungsfall mit $\tau_b$ überlagert wird. Im Rahmen der Erfindung wird die Gewindesteigung dann so variiert, daß die Verbundspannung $\tau_{ES}$ der Eigenspannung der Verbundspannung $\tau_b$ durch Belastung derart entgegenwirkt, daß Spitzen in der Eigenspannung $\tau_b$ durch Belastung abgemildert werden.

Der Eigenspannung entspricht eine Dehnung $\varepsilon_{ES}(x)$, die das Bauteil aufgrund der Eigenspannung erfährt. Der Zusammenhang zwischen der Verbundspannung der Eigenspannung $\tau_{ES}$ und der Dehnung $\varepsilon_{ES}$ des Bauteils in Folge der Eigenspannung ist wie folgt:

$$\tau_{ES}(x) = \frac{-\varphi_A}{l_b} * E_t * \frac{d}{dx}\varepsilon_{ES}(x) \cdot \qquad (9)$$

Ferner kann durch die Eigenspannung keine virtuelle Arbeit verrichtet werden, das heißt es gilt:

$$\int_0^x \tau_{ES}(t)dt = 0, \qquad (10)$$

was bedeutet, daß die mittlere Verbundspannung der Eigenspannung $\tau_{mES} = 0$ ist, daß also gilt:

$$==> \quad \tau_{mES} = \frac{-\varphi_A}{l_b} * E_t * (\varepsilon_{ES}(1) - \varepsilon_{ES}(0)) = 0 \qquad (11)$$

$$==> \quad \varepsilon_{ES}(0) = \varepsilon_{ES}(1)$$

Der erste Schritt bei der Herleitung einer geeigneten Gewindeform bzw. Leitkurve des Gewindes besteht also darin, eine geeignete Verbundspannung $\tau_{ES}$ der Eigenspannung vorzugeben und aus dieser dann den entsprechenden Dehnungsverlauf $\varepsilon_{ES}(x)$ des Bauteils in Folge der Eigenspannung zu ermitteln. Aus dem Dehnungsverlauf $\varepsilon_{ES}(x)$ läßt sich dann der gewünschte Verlauf der Leitkurve wie folgt ermitteln:

Es sei p0 die Nennsteigung bzw. mittlere Steigung des Gewindes, welche variiert werden soll. Die tatsächliche, variable Steigung p(x) des Gewindes wird dann wie folgt ausgedrückt:

$$p(x) = p0 - dp(x), \qquad (12)$$

wobei die Variation der Steigung dp an der Stelle x gegeben ist durch:

$$dp(x) = p0 * \varepsilon_{ES}(x) * \left(1 - \frac{A_t * E_t}{A_s * E_s}\right). \qquad (13)$$

Somit ergibt sich folgende Leitkurve für das Gewinde mit den gewünschten Eigenschaften:

$$LK(x) = \begin{pmatrix} p0 * \left[x * \frac{l_h}{p0} - \left(1 - \frac{A_t * E_t}{A_s * E_s}\right) \int_0^x \varepsilon_{ES}(s)ds\right] \\ r(x) * cos\left(x * \frac{l_h}{p0} * 2\pi\right) \\ r(x) * sin\left(x * \frac{l_h}{p0} * 2\pi\right) \end{pmatrix} \qquad (14)$$

Die Leitkurve gemäß der obigen Gleichung (14) beschreibt somit den räumlichen Verlauf des Schwerpunkts des Flankenquerschnitts der Schraube, wenn sie nicht in das Bauteil eingeschraubt ist, das heißt wenn die Schraube an sich nicht gedehnt ist. Mit anderen Worten kann die Schraube mit den gewünschten Eigenschaften anhand der in Gleichung (14) definierten Leitkurve hergestellt werden.

**2. Ausführungsbeispiel: Lasteinleitung**

Bei der Verbindung zwischen einer Schraube und einem Bauteil zur Lasteinleitung sollen Lasten über die Schraube in das Bauteil eingeleitet bzw. aus dem Bauteil ausgeleitet werden. Diese Einwirkungen geben den Spannungszustand im Verbund maßgeblich vor.

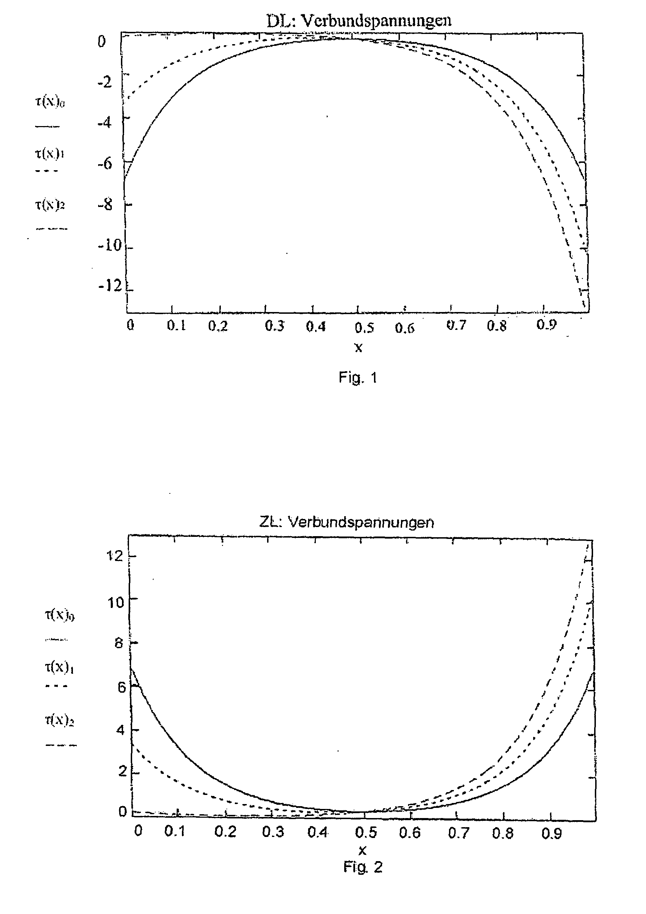

In Figur 1 sind drei typische Verläufe der Verbundspannung bei der Einleitung einer Drucklast in ein Bauteil gezeigt. Figur 2 zeigt die entsprechenden Verläufe der Verbundspannung für den Fall, daß eine Zuglast in das Bauteil eingeleitet wird.

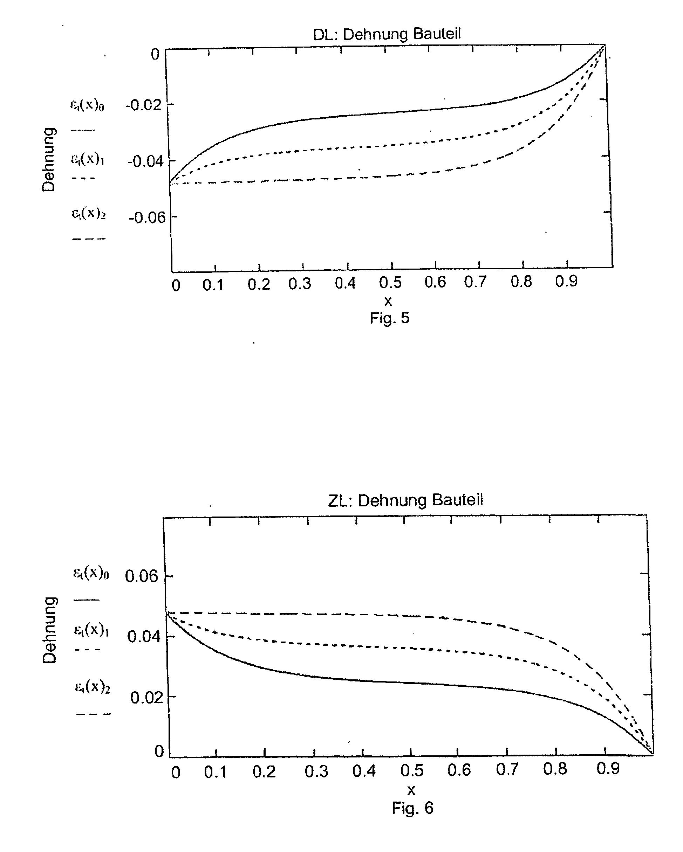

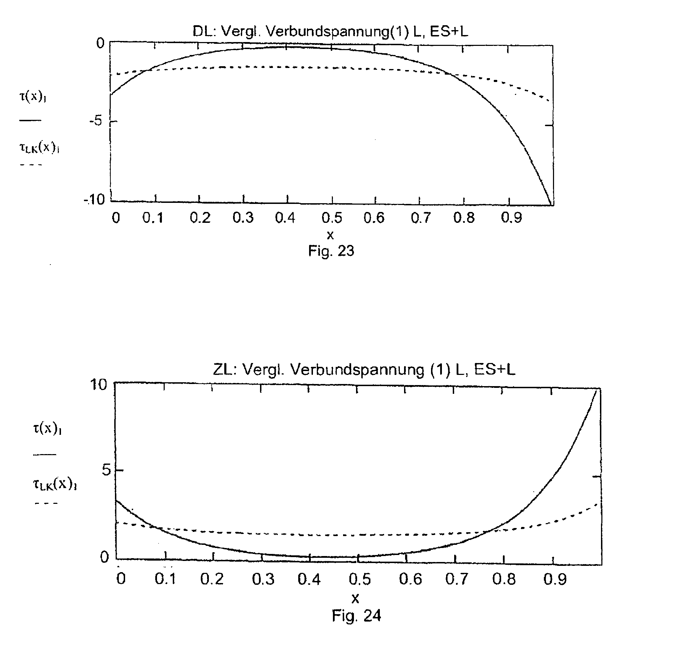

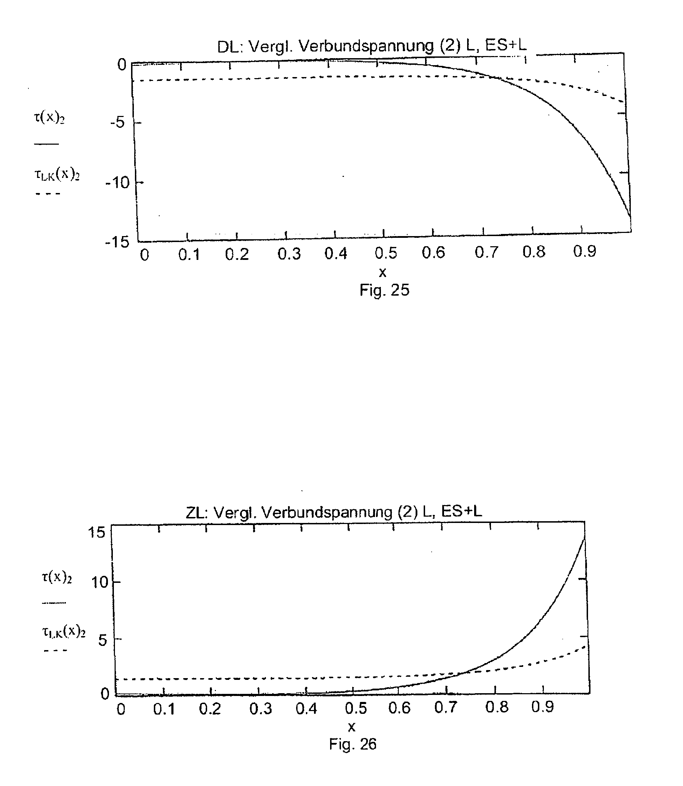

Die drei typischen Verbundspannungsverläufe sind durch die Indices 0,1 und 2 charakterisiert. Die selben Indices 0,1 und 2 werden in den folgenden Figuren 1 bis 28 verwendet, um für die drei in Figuren 1 und 2 gezeigten Verbundspannungsverläufe die zugehörigen weiteren Parameter zu bezeichnen. Die Situation der Lasteinleitung mit einer Verbundspannung $\tau(x)_0$, wie sie in Figuren 1 und 2 gezeigt ist, wird in der folgenden Beschreibung daher auch als "Fall 0" bezeichnet. Die Verbundspannung "$\tau$" enspricht der Variablen "$\tau_b$" aus dem vorhergehenden Abschnitt. Ebenso werden die Lasteinleitungen mit Verbundspannungen $\tau(x)_1$ und $\tau(x)_2$, wie sie in Figuren 1 und 2 gezeigt sind, als "Fall 1" bzw. "Fall 2" bezeichnet.

Wie den Figuren 1 und 2 zu entnehmen ist, ist der Fall 0 durch einen symmetrischen Verlauf der Verbundspannung $\tau(x)_0$ charakterisiert. Ein derartiger symmetrischer Verbundspannungsverlauf ist typisch für Situationen, in denen die Dehnsteifigkeiten des Bauteils und der Schraube gleich oder ähnlich sind und in denen die Verbundlänge kurz ist. Wie in Figuren 1 und 2 zu erkennen ist, stellen sich im Fall 0 die Maxima der Verbundspannung $\tau(x)_0$ am Anfang und am Ende der Verbundlänge ein.

Der Fall 2 beschreibt einen asymmetrischen Verbundspannungsverlauf, wie er sich typischerweise bei ungleichen Dehnsteifigkeiten und kurzen Verankerungslängen ausbildet. Der für solche Fälle typische Verbundspannungsverlauf $\tau(x)_1$ zeichnet sich durch ein stärker ausgeprägte Maximum am Anfang des Verbundes aus, das heißt an der Außenseite des Bauteils bei x = 1. Jedoch stellt sich im Fall 1 auch ein etwas weniger stark ausgeprägtes Maximum der Verbundspannung $\tau(x)_1$ am Ende des Verbundes, d.h. bei x = 0 ein.

Der Fall 2 zeichnet sich durch einen asymmetrischen Verlauf der Verbundspannung $\tau(x)_2$ aus, bei dem sich ein Maximum der Verbundspannung $\tau(x)_2$ am Anfang des Verbundes (bei x = 1) einstellt und die Verbundspannung $\tau(x)_2$ bis zum Ende des Verbundes (x = 0) kontinuierlich abfällt. Ein derartiger Verbundspannungsverlauf ist typisch für ungleiche Dehnsteifigkeiten der Schraube und des Bauteils und lange Verbundlängen.

Bei der folgenden Berechnung der Dehnungen und Axialspannungen in der Schraube und im Bauteil wurden die folgenden Zahlenwerte für die in dem vorhergehenden Abschnitt 1 definierten Größen verwendet:

$d_S = 6$,

$d_t = 20$,

$E_s = 210.000$,

$E_t = 400$, und

$l_b = 160$.

Figur 3 zeigt die Axialspannung $\sigma_t(x)$ im Bauteil für die Fälle 0, 1 und 2 im Falle einer Drucklast, und Figur 4 im Falle einer Zuglast.

Figur 5 zeigt die Dehnung $\varepsilon_t(x)$ im Bauteil für die Fälle 0, 1 und 2 für den Fall einer Drucklast, und Figur 6 für den Fall einer Zuglast.

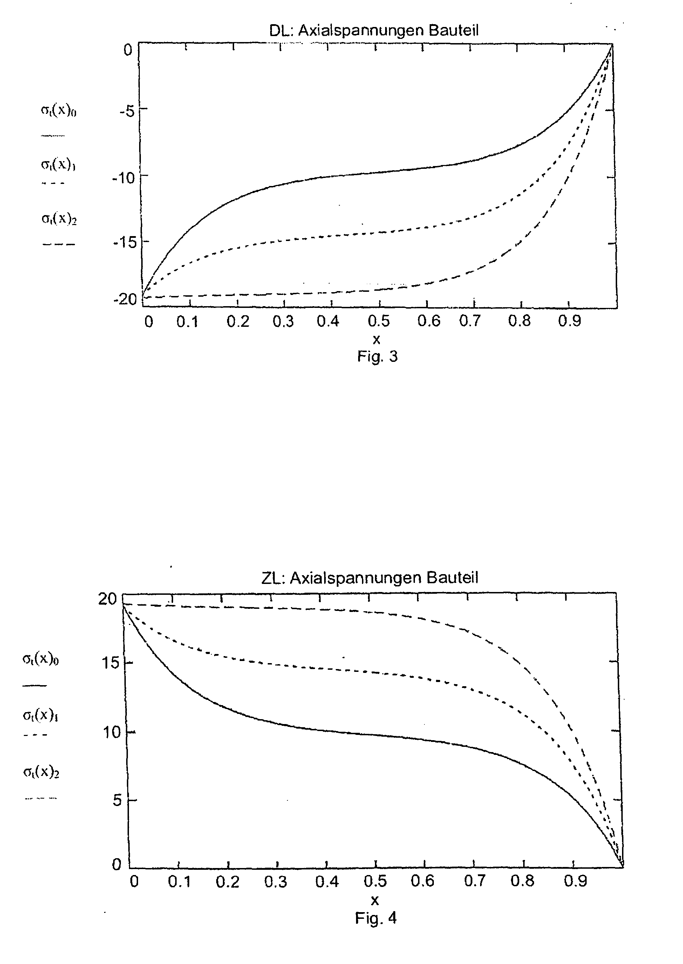

In Figuren 3 und 4 ist zu erkennen, daß die Axialspannung $\sigma_t(x)_0$ für den Fall 0 am Anfang und am Ende der Verbundlänge stark zunimmt, während sie in der Mitte des Verbundes lediglich moderat ansteigt. Der rapide lokale Anstieg der Axialspannungen an den Enden des Verbundes weist bereits auf eine Versagensquelle bei der Lasteinleitung hin. Im Fall 1 und 2 konzentriert sich der starke Anstieg der Axialspannung hingegen auf den Anfang des Verbundes, das heißt auf den Bereich von x = 0,7 bis x = 1.

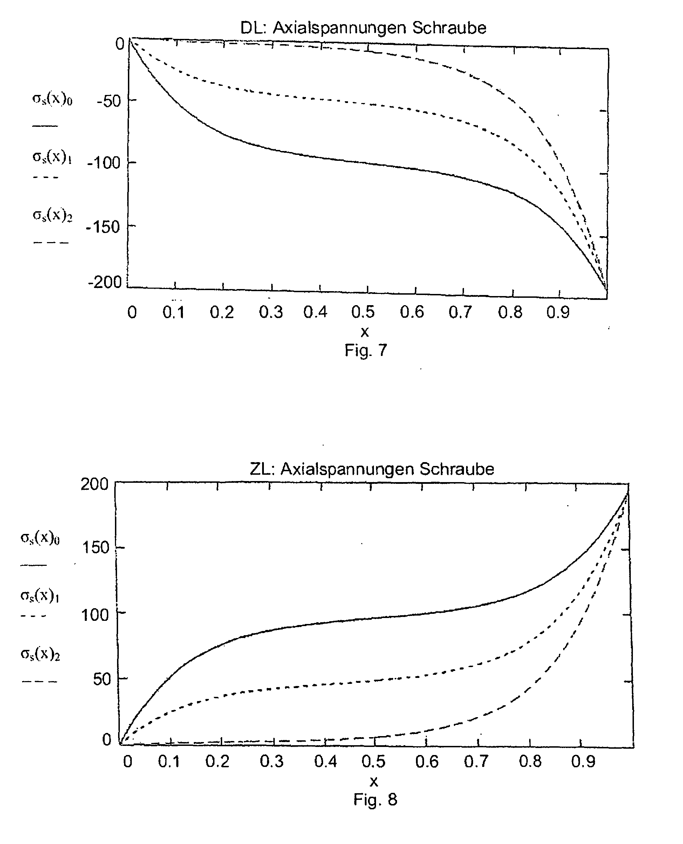

Figur 7 zeigt die Axialspannung $\sigma_s(x)$ in der Schraube für die drei Fälle 0, 1 und 2 über die Länge des Verbundes im Falle einer Drucklast, und Figur 8 für den Fall einer Zuglast.

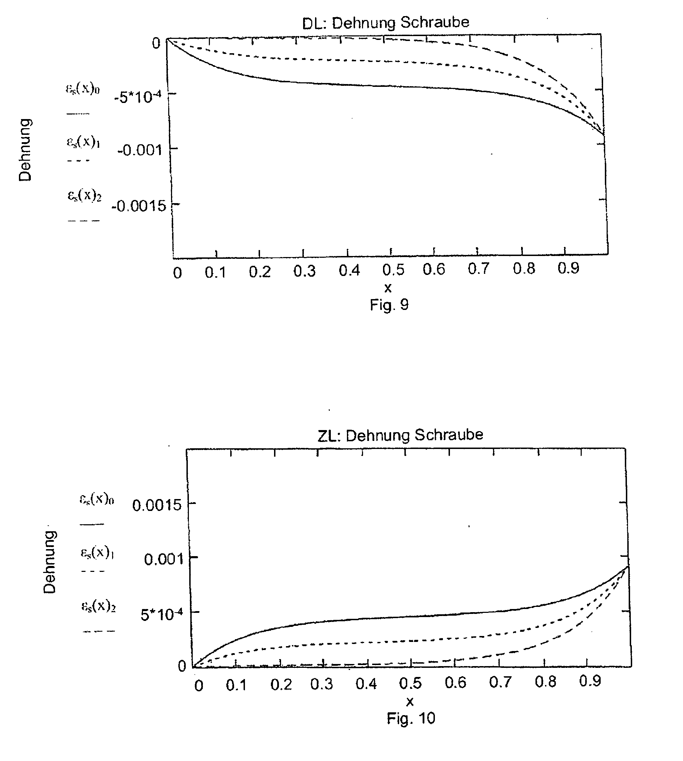

Figur 9 zeigt die Dehnung $\varepsilon_s(x)$ der Schraube für die drei Fälle 0, 1 und 2 für den Fall einer Drucklast und Figur 10 für den Fall einer Zuglast. Durch Vergleich der Figuren 3 bis 6 einerseits und der Figuren 7 bis 10 andererseits erkennt man den komplementären Verlauf in Spannung und Dehnung zwischen Bauteil und Schraube.

Wie im vorhergehenden Abschnitt 1 erläutert wurde, läßt sich durch geeignete Variation der Steigung des Gewindes der Schraube eine Eigenspannung im Verbund erzeugen, die bereits ohne Last wirkt. Gemäß der Erfindung soll die Variation der Steigung zu einer Verbundspannung $\tau_{ES}(x)$ in Folge der Eigenspannung führen, die der in Figuren 1 und 2 gezeigten Verbundspannung unter Lasteinwirkung derart entgegenwirkt, daß die Spitzen in der Verbundspannung unter Last zumindest teilweise kompensiert werden.

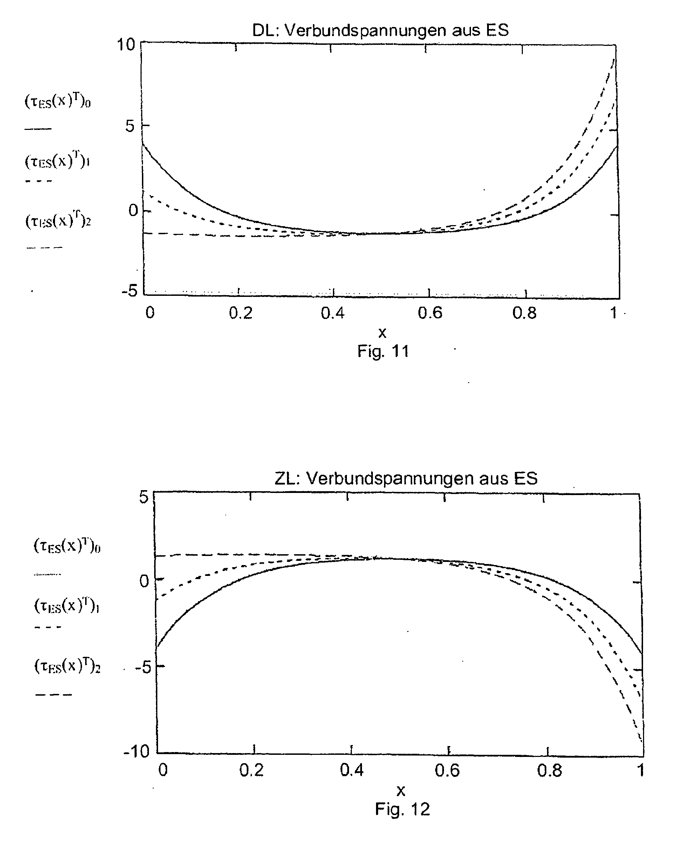

In Figur 11 sind für den Fall der Drucklast drei Verbundspannungsverläufe $\tau_{ES}(x)$ der Eigenspannung für die Fälle 0, 1 und 2 gezeigt, die den Maxima in der Verbundspannung $\tau(x)$ unter Last von Figur 1 entgegenwirken und daher geeignet sind, letztere zumindest teilweise, zu kompensieren.

Auf ähnliche Weise sind in Figur 12 die Verbundspannungen $\tau_{ES}(x)$ der Eigenspannung für die Fälle 0, 1 und 2 gezeigt, die den Verbundspannungen unter Zuglast von Figur 2 entgegenwirken.

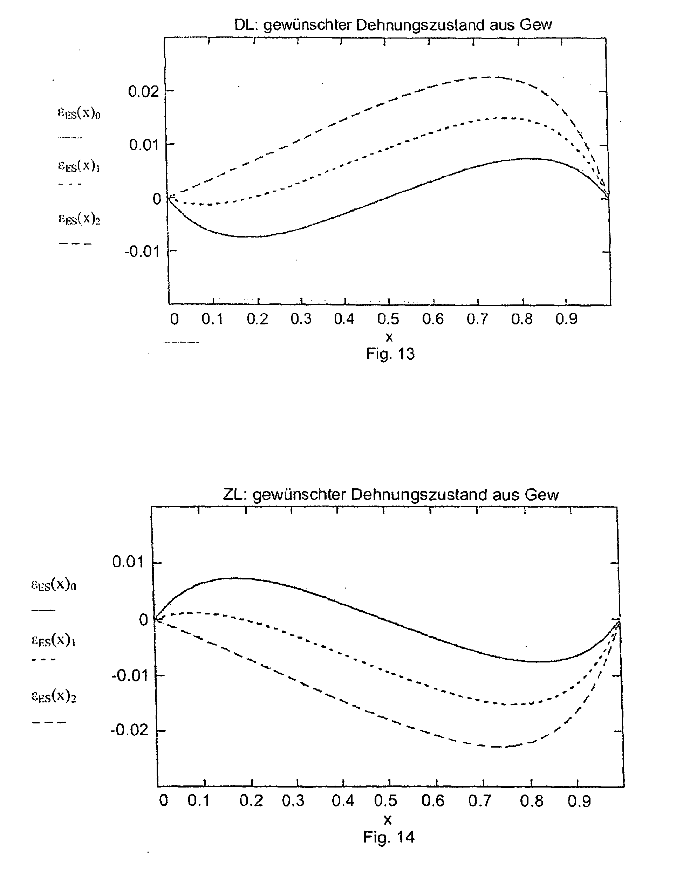

Figuren 13 und 14 zeigen die Dehnung $\varepsilon_{ES}(x)$ des Bauteils aufgrund der Eigenspannung, die mit der Verbundspannung $\tau_{ES}(x)$ der Eigenspannung gemäß Gleichung (9) zusammenhängt. Die Dehnungsverläufe $\varepsilon_{ES}(x)$ von Figur 13 und Figur 14 können gemäß Gleichung (14) verwendet werden, um die Leitkurve der Schraube zu berechnen, die die gewünschte Eigenspannung erzeugt.

Wie eingangs erwähnt wurde, ist der Ausgangspunkt für die Konstruktion der Schraube die Wahl des gewünschten Verlaufs der Verbundspannungen $\tau_{ES}(x)$ der Eigenspannung von Figuren 11 und 12 bzw. der gewünschte Verlauf der Dehnung des Bauteils $\varepsilon_{ES}(x)$ unter der Eigenspannung von Figuren 13 und 14. Die naheliegendste Wahl bestünde darin, die Verbundspannungen $\tau(x)$, wie sie in Figuren 1 und 2 gezeigt sind, zu invertieren, um die erwünschte Verbundspannung $\tau_{ES}(x)$ der Eigenspannung zu erhalten. Eine derartige Verbundspannung der Eigenspannung läßt sich jedoch faktisch nicht unbedingt erzeugen, weil sie beispielsweise mit der Bedingung verschwindender virtueller Arbeit gemäß Gleichungen (10) und (11) nicht vereinbar ist. Statt dessen wurde in dem hier gezeigten Beispiel der Verlauf der Dehnung $\varepsilon_{ES}(x)$ des Bauteils in Folge der Eigenspannung als Linearkombination von Gewichtsfunktionen und der Lösung für die Dehnungen des Bauteils $\varepsilon_t(x)$ unter Last wie folgt angesetzt:

$$\varepsilon_{ES}(x) = -[fka_0(x) * (\varepsilon_t(x) - \varepsilon_t(0)) + fka_1(x) * (\varepsilon_t(x) - \varepsilon_t(1))] \tag{15}$$

wobei die Gewichtsfunktionen $fka_0(x)$ und $fka_1(x)$ wie folgt definiert sind:

$$fka_0(x) = \sum_{i=0}^{n} a_{0,i} * (1 - x)^i \qquad fka_0(1) = 0$$

$$fka_1(x) = \sum_{i=0}^{n} a_{1,i} * (x)^i \qquad fka_1(0) = 0$$

Durch geeignete Wahl der Koeffizienten $a_0$,i und $a_1$,i in den Gewichtfunktionen kann dann der gewünschte Verlauf von $\varepsilon_{ES}(x)$ generiert werden.

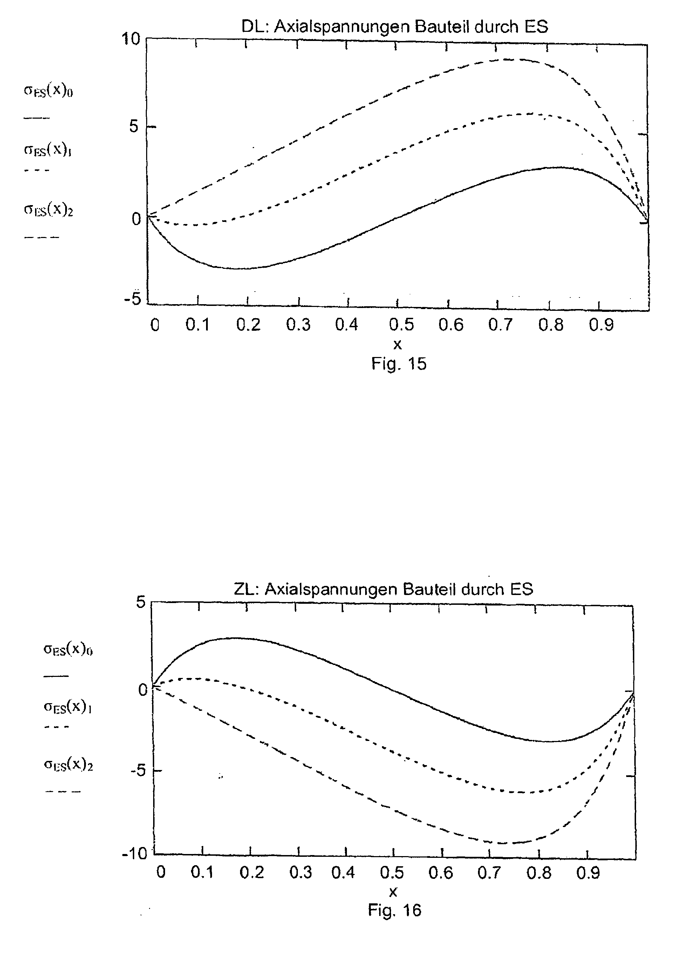

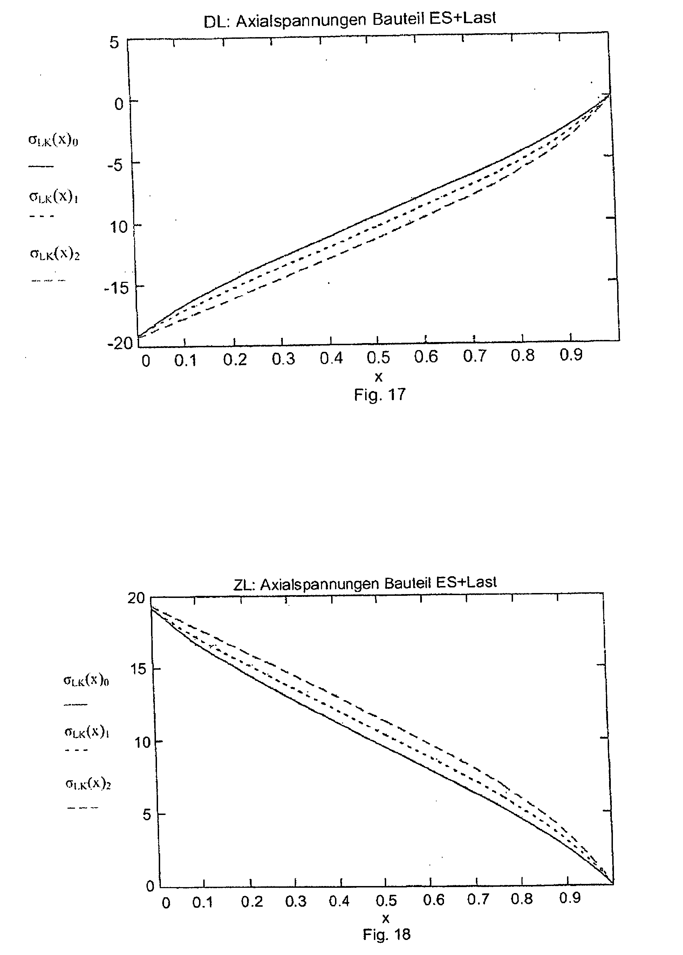

Der Verlauf der durch die Eigenspannung hervorgerufenen Axialspannung $\sigma_{ES}(x)$ für die drei Fälle 0, 1 und 2 ist in Figur 15 für Druckbelastung und in Figur 16 für Zugbelastung gezeigt. Figuren 17 und 18 zeigen die kombinierte Axialspannung im Bauteil, wenn sowohl die Eigenspannung als auch die Last wirkt. Diese kombinierte Axialspannung wird hier mit $\sigma_{LK}(x) = \sigma_\tau(x) + \sigma_{ES}(x)$ bezeichnet. Wie Figuren 17 und 18 zu entnehmen ist, ergibt sich für die kombinierte Axialspannung $\sigma_{LK}(x)$ eine über die Länge des Verbundes gleichmäßig ansteigende bzw. abfallende Axialspannung. Diese gleichmäßige Zu- oder Abnahme der Axialspannung ist wesentlich verträglicher für den Verbund als die sich lokal stark ändernden Axialspannungen unter Last ohne erfindungsgemäße Eigenspannungsverteilung, wie sie in Figuren 3 und 4 insbesondere am Anfang des Verbundes zwischen x = 0,7 und x = 1 auftreten. Durch den gleichförmigeren Spannungsverlauf werden Spannungsspitzen in der Verbundspannung vermieden und wird die Haltbarkeit des Verbundes verstärkt.

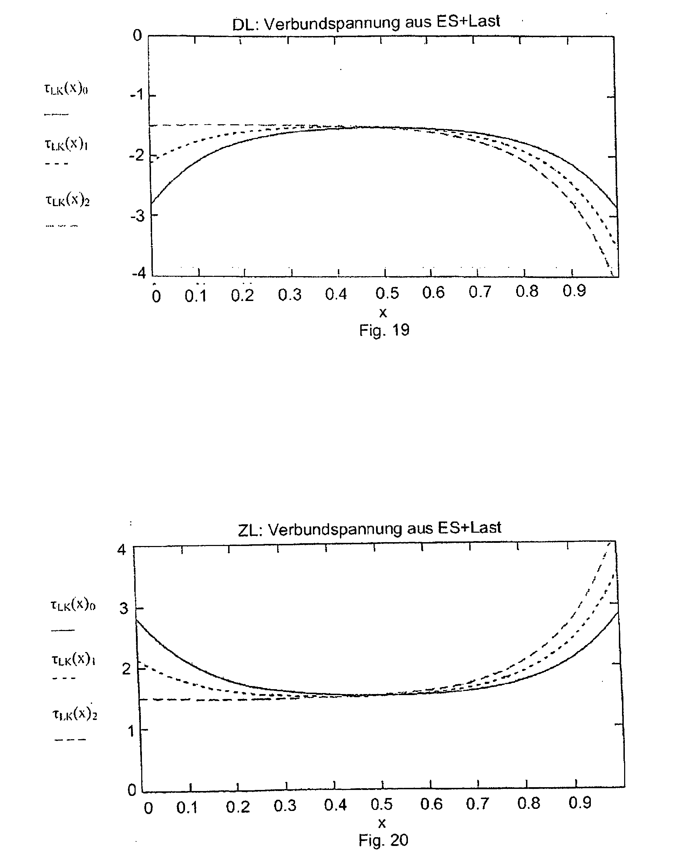

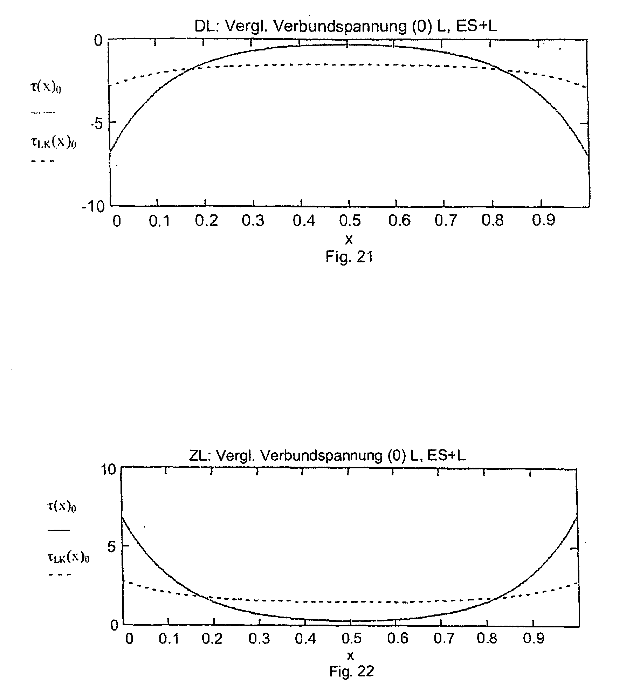

Figuren 19 und 20 zeigen die kombinierte Verbundspannung $\tau_{LK}(x)$, die der Summe der Verbundspannung $\tau$ (x) unter Last und der Verbundspannung $\tau_{ES}(x)$ aufgrund der Eigenspannung entspricht. Die kombinierte Verbundspannung hat zwar immer noch Maxima am Anfang des Verbundes, jedoch sind diese weitaus geringer ausgeprägt als bei der Verbundspannung $\tau$ (x) aufgrund der Last allein, wie den Figuren 21 bis 26 zu entnehmen ist, in denen für die unterschiedlichen Fälle 0, 1 und 2 und für Druck- und Zugbelastung die Verbundspannung $\tau(x)$ aufgrund der Belastung und die kombinierte Verbundspannung $\tau_{LK}(x)$ gegenübergestellt sind. Wie den Figuren 21 bis 26 zu entnehmen ist, können durch die erfindungsgemäße Variation der Gewindesteigung der Schraube die Spitzen der kombinierten Verbundspannung $\tau_{LK}(x)$ auf rund ein Drittel der Spitzen der Verbundspannungen $\tau(x)$ reduziert werden, wie sie sich bei einer gleichförmigen Gewindesteigung unter Last ergeben würden.

Wie den Figuren 21 bis 26 zu entnehmen ist, ist die kombinierte Verbundspannung $\tau_{LK}(x)$ im Mittel genauso hoch, wie die Verbundspannung $\tau(x)$ unter Belastung, nur ist sie gleichförmiger über die Verbundlänge verteilt, so daß die Spitzen in der Verbundspannung abgebaut sind. Aus den Gleichungen (10) und (11) ist unmittelbar klar, daß die mittlere Verbundspannung durch die Eigenspannung nicht geändert werden kann, weil die virtuelle Arbeit der Eigenspannung null ist, und dies ist auch nicht der Zweck der Erfindung. Vielmehr muß ja im Falle der Lasteinleitung eine gewisse Netto-Verbundspannung vorliegen, um Kraft von der Schraube auf das Bauteil übertragen zu können. Zweck der Erfindung ist vielmehr einen gleichförmigeren Verlauf der kombinierten Verbundspannung zu erzeugen und dadurch Spitzen in der Verbundspannung, an denen der Verbund andernfalls versagen könnte, abzubauen.

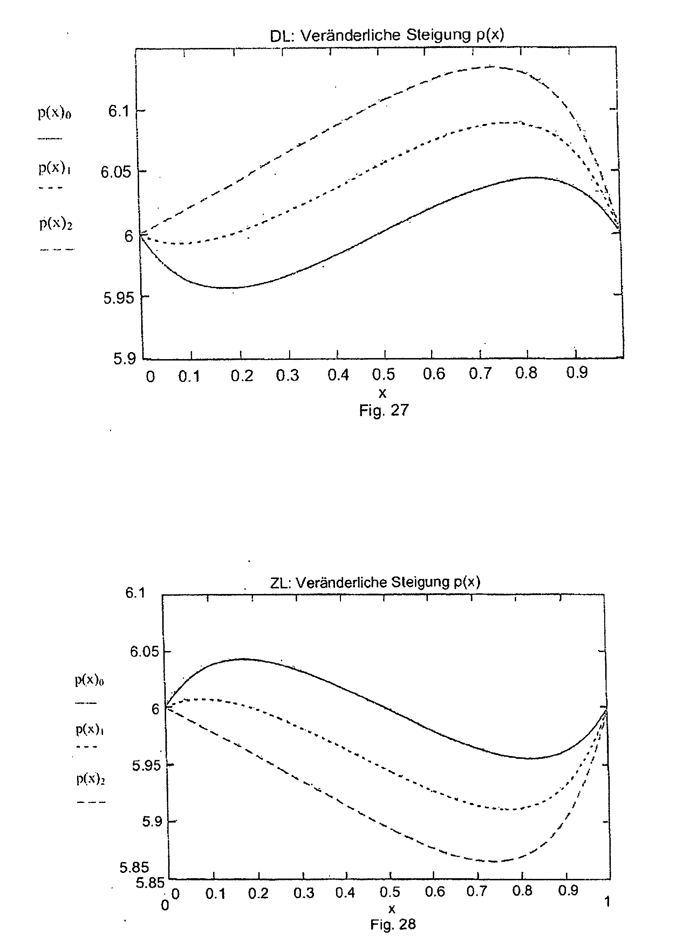

In Figur 27 ist der Verlauf der veränderlichen Gewindesteigung p(x) gezeigt, wie er sich gemäß Gleichung (12) und (13) für die drei Fälle 0, 1 und 2 entsprechend den Verläufen der Dehnung $\varepsilon_{ES}$ von Figur 13 ergibt. Da die Eigenspannungsverläufe $\tau(x)_0$, $\tau(x)_1$ und $\tau(x)_2$ von Figur 1 typisch für die Lasteinleitung einer Drucklast in ein Bauteil sind, zeigt Figur 27 den typischen Verlauf einer veränderlichen Gewindesteigung, mit dem die Spitzen in der Verbundspannung von Figur 1 zumindest teilweise kompensiert werden können. In allen drei Fällen zeichnet sich der Verlauf der Gewindesteigung durch ein Maximum in der zweiten Hälfte des Gewindes, das heißt in dem Bereich von 0,5 < x < 1 aus. Ein guter Effekt bezüglich der Homogenisierung der Verbundspannung $\tau$ läßt sich erreichen, wenn dieses Maximum zwischen x = 0,6 und 0,9, vorzugsweise zwischen x = 0,7 und x = 0,85 liegt.

Ferner ändert sich die Krümmung des Graphen der Gewindesteigung in einem mittleren Abschnitt der Verbundlänge, so daß sich für den Fall 0 und für den Fall 1 ein Maximum in der ersten Hälfte der Verbundlänge, das heißt in dem Bereich 0 < x < 0,5 ergibt. Dieses Maximum liegt vorzugsweise in einem Bereich von 0,05 < x < 0,4 und besonders vorzugsweise in einem Bereich von 0,1 < x < 0,3.

Wie Figur 28 zu entnehmen ist, ist der Verlauf für den Fall einer Zugbelastung gerade umgekehrt, das heißt die Gewindesteigung hat ein Minimum in der zweiten Hälfte und optional ein Maximum in der ersten Hälfte der Verbundlänge.

Diese Standardverläufe der Gewindesteigung für die Einleitung von Druck- bzw. Zuglast können für Standardanwendungen bereitgestellt werden, in denen die Gewindesteigung nicht auf die im Einzelfall konkret erwartete bzw. berechnete Verbundspannung abgestimmt wird. Statt dessen ist es möglich, für bestimmte Materialkombinationen, beispielsweise Gewindestangen bzw. Schrauben aus Stahl mit Bauteilen aus Massivholz oder Beton, Standardschrauben oder Gewindestangen herzustellen, die eine standardmäßige Variation der Gewindesteigung aufweisen, wie sie oben beschrieben wurde. Durch derartige Standardschrauben bzw. Gewindestangen kann die unter Belastung auftretende maximale Verbundspannung immer noch deutlich abgemildert werden, selbst wenn mit einer solchen Standardlösung nicht das volle Potential der Erfindung ausgeschöpft wird. Dafür lassen sich die Standardschrauben bzw. Gewindestangen in großen Stückzahlen kostengünstig herstellen, und sie stellen immer noch eine wesentliche Verbesserung gegenüber herkömmlichen Schrauben bzw. Gewindestangen mit konstanter Gewindesteigung dar.

### 3. Ausführungsbeispiel: Armierung

Auch bei einer Armierung mit einer Schraube bzw. Gewindestange lassen sich Spitzen in der Verbundspannung bei Belastung durch eine geeignete Eigenspannungsverteilung zumindest teilweise kompensieren. Die Gedankengänge zur Konstruktion der geeigneten Armierungsschraube bzw. -gewindestange sind ähnlich wie bei dem vorstehend beschriebenen Fall der Lasteinleitung. Ein wesentlicher Unterschied besteht jedoch darin, daß es einen vergleichbar typischen Verbundsspannungsverlauf, wie er in Figuren 1 und 2 für die Lasteinleitung gezeigt ist, im Falle der Armierung nicht unbedingt gibt, statt dessen ist das Spektrum möglicher Verbundspannungsverläufe unter Belastung breiter und komplexer. Es hängt von der Gesamtkonstruktion des Bauteiles und seiner Belastung ab, welche Verbundspannung zwischen dem Bauteil und der Armierung unter Last auftreten werden. Grundsätzlich ist es jedoch möglich, Verbundspannungen zwischen dem Bauteil und der Armierung durch analytische Berechnungen oder Computersimulationen vorherzusagen, und dann kann die Leitkurve des Gewindes auf die oben beschrieben Weise so berechnet werden, daß die erzeugte Eigenspannung in der Tat die Spitzen in der Verbundspannung kompensiert.

Auch in den folgenden Beispielen für die Armierung wird ein analytisches Modell mit Ersatzzylinder verwendet. Für die Armierung sind folgende Randbedingungen zu beachten:

1. Die virtuelle Arbeit der Eigenspannung über die Verbundlänge muß null betragen, und
2. die axialen Spannungen für x = 0 und x = 1 müssen null betragen.

Im folgenden wird davon ausgegangen, daß ein geeigneter Eigenspannungszustand $\sigma_{ES}(x)$ durch die Armierung erzeugt werden soll. Dann machen wir den Ansatz

$$\sigma_{ES}(x) = \sigma_0 * f(x) \tag{16}$$

wobei f(x) eine Ansatzfunktion ist mit f(0) = 0 und f(1) = 0. $\sigma_0$ entspricht dem angestrebten Betrag der maximalen Vorspannung.

Der zugehörige Dehnungszustand ergibt sich dann folgendermaßen:

$$\varepsilon_{ES}(x) = \frac{\sigma_{ES}(x)}{E_t} - \varepsilon_{mES} = \frac{\sigma_0 * f(x)}{E_t} - \varepsilon_{mES} \ , \tag{17}$$

wobei $\varepsilon_{mES}$, die mittlere Dehnung, gegeben ist als:

$$\varepsilon_{mES} = \int_0^1 \frac{\sigma_0 * f(t)}{E_t} dt = \frac{\sigma_0}{E_t} \int_0^1 f(t) dt \tag{18}$$

Aus dem Verlauf der Dehnung $\varepsilon_{ES}(x)$ aufgrund der Eigenspannung kann dann wiederum die Leitkurve nach der obigen Gleichung (16) berechnet werden.

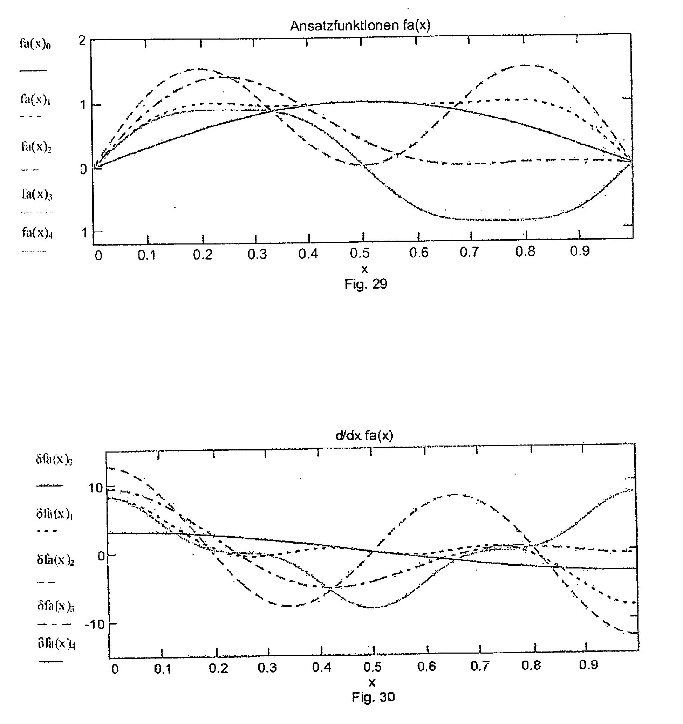

Die Ansatzfunktion f(x) ist so zu wählen, daß sie unter Einhaltung der Randbedingungen dem invertierten Spannungszustand unter Belastung möglichst nahe kommt. Figur 29 zeigt Ansatzfunktionen f(x), die mit Indices von 0 bis 4 gekennzeichnet sind und in typischen Armierungsanwendungen Verwendung finden. Dabei entspricht

$f(x)_0$:  einer symmetrischen Ansatzfunktion mit parabelförmigen Verlauf über die Verankerungslänge,

$f(x)_1$:  einer symmetrischen Ansatzfunktion, die ansteigt, dann über eine weite Strecke nahezu konstant ist und wieder abfällt,

$f(x)_2$:  einer symmetrischen Ansatzfunktion mit zwei Maxima und einem Minimum,

f(x)$_3$:     einer asymmetrischen Ansatzfunktion, und

f(x)$_4$:     einer Ansatzfunktion mit Zug- und Druckzustand über der Verankerungslänge.

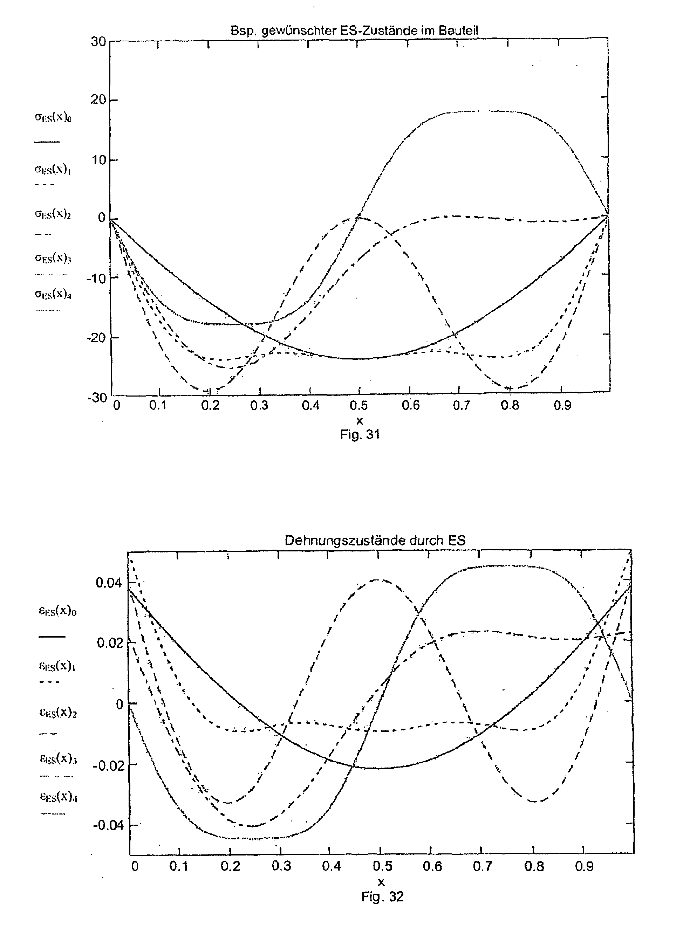

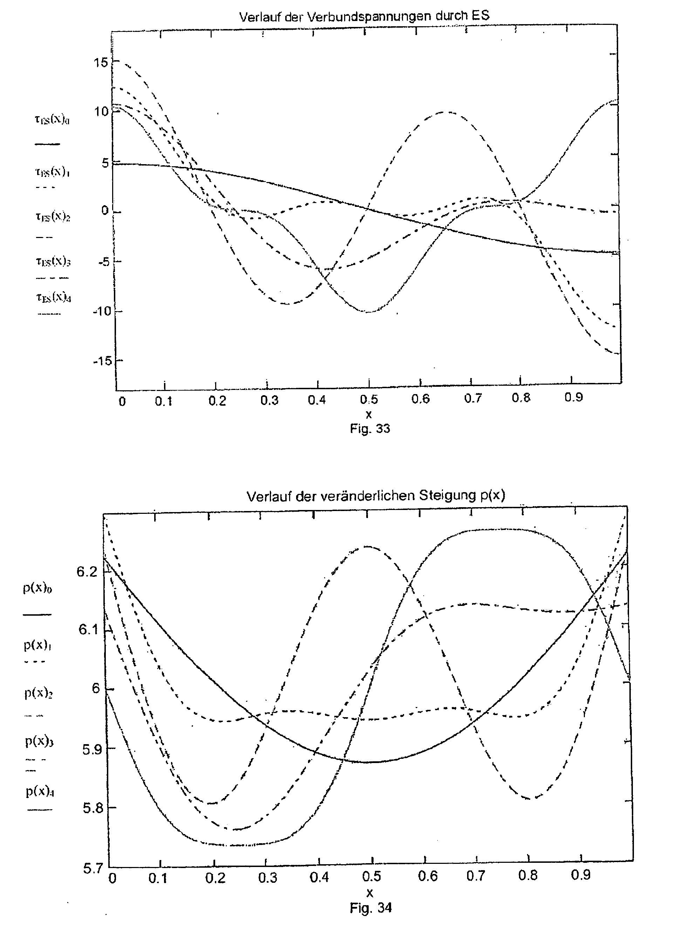

Figur 30 zeigt die erste Ableitung der Funktionen f(x)$_0$ bis f(x)$_4$ aus Figur 29. Figur 31 zeigt die den Ansatzfunktionen f(x)$_0$ bis f(x)$_4$ entsprechenden Spannungsverläufe $\sigma_{ES}(x)_0$ bis $\sigma_{ES}(x)_4$, und Figur 32 die zugehörigen Verläufe der Dehnung $\varepsilon_{ES}(x)$. Figur 33 zeigt die Verläufe der Verbundspannungen, wie sie durch die Eigenspannung erzeugt werden. Schließlich zeigt Figur 34 die zugehörigen Verläufe der veränderlichen Steigung.

Unter den fünf vorgestellten Ansatzfunktionen ist die Funktion f(x)$_1$ besonders hervorzuheben. Wie Figur 31 zu entnehmen ist, ergibt sich für diesen Fall ein Spannungsverlauf $\sigma_{ES}(x)_1$, bei dem $\sigma_{ES}(x)_1$ zwischen x = 0 und x = 0,2 relativ rasch auf einen negativen Wert abfällt, zwischen x = 0,2 und x = 0,8 ungefähr konstant auf diesem niedrigen Wert bleibt und dann zwischen x = 0,8 und x = 1 wieder auf 0 ansteigt. Mit anderen Worten führt dieser Fall zu einer Eigenspannung der Armierung, bei der das Bauteil über den größten Teil der Armierungslänge unter einem konstanten Druck gehalten wird. Diese Eigenspannungsverteilung ergibt sich aus dem Verlauf der Gewindesteigung p(x)$_1$, die in einem erstem Abschnitt zwischen x = 0 und x = 0,2 um einen Wert $\Delta$p abfällt, der im gezeigten Auführungsbeispiel ca. 0,3 beträgt, in einem mittleren Abschnitt zwischen x = 0,2 und x = 0,8 unterhalb von p(x=0)$_1$ - $\Delta$p bleibt und erst in einem dritten Abschnitt, zwischen x = 0,8 und x = 1 wieder über den Wert p(x=0)$_1$ - $\Delta$p steigt.

Obwohl es wie eingangs erwähnt weniger Standardanwendungen für Armierung gibt, als für die Lasteinleitung, gibt es doch für eine Armierung, die auf die beschriebene Weise über einen großen Teil des Verbundes einen konstanten Druck erzeugt, vielfältige Anwendungen. Daher stellt zumindest die Gewindeform gemäß p(x)$_1$ einen Standardverlauf dar, der auf vorteilhafte Weise standardmäßig in Armierungen verwendet werden kann, ohne eine konkrete Untersuchung der Verläufe der Verbundspannung unter Belastung durchzuführen. Statt dessen können Standard-Armierungsschrauben für bestimmte Werkstoffkombinationen hergestellt werden, bei denen das Gewinde qualitativ den Verlauf von p(x)$_1$ von Figur 34 aufweist, und diese Armierungsschrauben führen in einer Vielzahl von Standardanwendungen zu wesentlich höherer Belastungsstabilität als gewöhnliche Armierungsschrauben oder Gewindestangen mit konstanter Gewindesteigung.

Die in der vorstehenden Beschreibung vorgestellten Merkmale können in beliebigen Kombinationen von Bedeutung sein.

## Patentansprüche

**1.** Verfahren zur Armierung eines Bauteils unter Verwendung einer Schraube oder einer Gewindestange, wobei die Schraube oder Gewindestange einen Verbund-Gewindeabschnitt hat, welcher in ein Bauteil einschraubbar ist, um mit dem Bauteil einen Verbund zu bilden, und welcher ein erstes, beim Einschrauben führendes Ende und ein zweites Ende hat,
**dadurch gekennzeichnet, daß** der Verbund-Gewindeabschnitt eine variable Gewindesteigung hat, durch die beim Einschrauben in das unbelastete Bauteil eine Eigenspannungsverteilung im Bauteil und eine zugehörige Eigenspannungs-Verbundspannung $\tau_{ES}$ erzeugt wird,
wobei die Eigenspannungs-Verbundspannung $\tau_{ES}$ einer Belastungs-Verbundspannung $\tau$, die sich unter Belastung des Bauteils ergibt, zumindest abschnittsweise derart entgegengesetzt ist, daß die kombinierte Verbundspannung, die sich aus einer Überlagerung der Belastungs-Verbundspannung $\tau$ und der Eigenspannungs-Verbundspannung im Belastungsfall ergibt, gegenüber mindestens einem Maximum in der Belastungs-Verbundspannung $\tau$ verringert wird.

**2.** Verfahren zur Einleitung von Kraft in ein Bauteil unter Verwendung einer Schraube oder Gewindestange, bei dem die Schraube oder Gewindestange einen Verbund-Gewindeabschnitt hat, welcher in ein Bauteil einschraubbar ist, um mit dem Bauteil einen Verbund zu bilden, und welcher ein erstes, beim Einschrauben führendes Ende und ein zweites Ende hat, wobei die Gewindesteigung variabel ist und in der dem zweiten Ende benachbarten Hälfte des Verbund-Gewindeabschnitts ein erstes lokales Extremum aufweist.

**3.** Verfahren nach Anspruch 2, bei dem unter der Annahme, daß die Länge des Verbund-Gewindeabschnitts auf eins normiert ist, das erste lokale Extremum sich in einem Abstand von 0,6 bis 0,9, vorzugsweise von 0,7 bis 0,85 vom ersten Ende befindet.

**4.** Verfahren nach Anspruch 2 oder 3, bei dem die Gewindesteigung ein zweites lokales Extremum aufweist, welches in der dem ersten Ende benachbarten Hälfte des Verbund-Gewindeabschnitts liegt und eine Krümmung aufweist, die derjenigen des ersten lokalen Extremums entgegengesetzt ist, wobei unter der Annahme, daß die Länge des Verbund-Gewindeabschnittes auf eins normiert ist, das zweite lokale Extremum sich vorzugsweise in einem Abstand von 0,05 bis 0,4, besonders vorzugsweise von 0,1 bis 0,3 von dem ersten Ende des Verbund-Gewindeabschnitts befindet.

5. Verfahren nach Anspruch 1, bei dem die Schraube oder Gewindestange einen Verbund-Gewindeabschnitt hat, welcher in ein Bauteil einschraubbar ist, um mit dem Bauteil einen Verbund zu bilden, und welcher ein erstes, beim Einschrauben führendes Ende und ein zweites Ende hat, wobei die Gewindesteigung in einem an das erste Ende angrenzenden Abschnitt ausgehend von einem Wert $p_0$ am ersten Ende um einen Wert $\Delta p$ abfällt, in einen mittleren Abschnitt unterhalb von $p_0 - \Delta p$ bleibt und in einem an das zweite Ende angrenzenden Abschnitt wieder über den Wert $p_0 - \Delta p$ ansteigt.

6. Verfahren nach Anspruch 5, bei dem unter der Annahme, daß die Länge des Verbund-Gewindeabschnitts auf eins normiert ist, der erste und/oder der zweite Abschnitt eine Länge von zwischen 0,07 und 0,35, vorzugsweise zwischen 0,1 und 0,3 und besonders vorzugsweise zwischen 0,15 und 0,25 hat, und/oder bei dem die Steigung im mittleren Abschnitt um weniger als $\pm$ 0,5 $\Delta p$, vorzugsweise um weniger als $\pm$ 0,3 $\Delta p$ variiert.

7. Verfahren nach einem der Ansprüche 2 bis 8, bei dem die Gewindesteigung am ersten und am zweiten Ende um weniger als 50%, vorzugsweise weniger als 30% und besonders vorzugsweise weniger als 10% der gesamten Variation der Gewindesteigung im Verbund-Gewindeabschnitt voneinander abweichen.

8. Verfahren zur Konstruktion einer Schraube oder Gewindestange mit veränderlicher Gewindesteigung und einem Verbund-Gewindeabschnitt, welcher in ein Bauteil einschraubbar ist, um mit dem Bauteil einen Verbund zu bilden, und welcher ein erstes, beim Einschrauben führendes und ein zweites Ende hat, mit den folgenden Schritten:

Ermitteln einer Belastungs-Verbundspannung $\tau$, die sich bei Belastung des Bauteils, für das die Schraube oder Gewindestange bestimmt ist, im Verbund zwischen dem Bauteil und der Schraube oder Gewindestange unabhängig von der speziellen Ausgestaltung des Gewindes ergibt,
Bestimmen der Variation der Gewindesteigung derart, daß die Schraube bzw. Gewindestange, wenn sie in das unbelastete Bauteil eingeschraubt ist, eine Eigenspannungs-Verbundspannung $\tau_{ES}$ erzeugt, die der Belastungs-Verbundspannung $\tau$ zumindest abschnittsweise derart entgegengesetzt ist, dass die kombinierte Verbundspannung, die sich aus einer Überlagerung der Belastungs-Verbundspannung $\tau$ und der Eigenspannungs-Verbundspannung $\tau_{ES}$ im Belastungsfall ergibt, gegenüber mindestens einem Maximum in der Belastungs-Verbundspannung $\tau$ verringert wird.

9. Computerprogramm, bei dessen Ausführung in einer Datenverarbeitungseinrichtung ein Verfahren nach Anspruch 8 ausgeführt wird.

10. Schraube oder Gewindestange mit einem Gewinde, dessen Steigung in Längsrichtung der Schraube oder Gewindestange variiert, und mit einem Verbund-Gewindeabschnitt, welcher in ein Bauteil einschraubbar ist, um mit dem Bauteil einen Verbund zu bilden, und welcher ein erstes, beim Einschrauben führendes Ende und ein zweites Ende hat, wobei die Gewindesteigung in der dem zweiten Ende benachbarten Hälfte des Verbund-Gewindeabschnitts ein erstes lokales Extremum aufweist.

11. Schraube oder Gewindestange nach Anspruch 10, bei der unter der Annahme, daß die Länge des Verbund-Gewindeabschnitts auf eins normiert ist, das erste lokale Extremum sich in einem Abstand von 0,6 bis 0,9, vorzugsweise von 0,7 bis 0,85 vom ersten Ende befindet.

12. Schraube oder Gewindestange nach Anspruch 10 oder 11, bei der die Gewindesteigung ein zweites lokales Extremum aufweist, welches in der dem ersten Ende benachbarten Hälfte des Verbund-Gewindeabschnitts liegt und eine Krümmung aufweist, die derjenigen des ersten lokalen Extremums entgegengesetzt ist, bei der unter der Annahme, daß die Länge des Verbund-Gewindeabschnitts auf 1 normiert ist, das zweiten lokalen Extremum sich vorzugsweise in einem Abstand von 0,05 bis 0,4, besonders vorzugsweise von 0,1 bis 0,3 von dem ersten Ende des Verbund-Gewindeabschnittes befindet.

13. Schraube oder Gewindestange mit einem Gewinde, dessen Steigung in Längsrichtung der Schraube oder Gewindestange variiert und, die einen Verbund-Gewindeabschnitt hat, welcher in ein Bauteil einschraubbar ist, um mit dem Bauteil einen Verbund zu bilden und welche ein erstes, beim Einschrauben führendes Ende und ein zweites Ende hat, wobei die Gewindesteigung in einem an das erste Ende angrenzenden Abschnitt ausgehend von einem

Wert $p_0$ am ersten Ende um einen Wert $\Delta p$ absinkt, in einem mittleren Abschnitt unterhalb von $p_0$ - $\Delta p$ bleibt und in einem an das zweite Ende angrenzenden Abschnitt wieder über den Wert $p_0$ - $\Delta p$ ansteigt.

14. Schraube oder Gewindestange nach Anspruch 13, bei der unter der Annahme, daß die Länge des Verbund-Gewindeabschnitts auf eins normiert ist, der erste und/oder der zweite Abschnitt eine Länge von 0,07 bis 0,35, vorzugsweise 0,1 bis 0,3 und besonders vorzugsweise 0,15 bis 0,25 hat, und/oder bei der die Steigung im mittleren Abschnitt um weniger als $\pm$ 0,5 $\Delta p$, vorzugsweise um weniger als $\pm$ 0,3 $\Delta p$ variiert.

15. Schraube oder Gewindestange nach einem der Ansprüche 10 bis 14, bei der die Gewindesteigung am ersten und am zweiten Ende um weniger als 50%, vorzugsweise weniger als 30% und besonders vorzugsweise um weniger als 10% der gesamten Variation der Gewindesteigung im Verbund-Gewindeabschnitt voneinander abweichen.

**Claims**

1. A method for reinforcing a component using a screw or a threaded rod, said screw or threaded rod having a bonding thread section which can be screwed into a component in order to form a bond with the component and having a first end which is a leading end when screwing in,
**characterised in that** the bonding thread section has a variable thread lead
by means of which upon screwing into the load-free component an internal stress distribution in the component and a corresponding bond stress $\tau_{ES}$ of the internal stress is created,
wherein said bond stress $\tau_{ES}$ of the internal stress is, at least in sections, opposite to a load bond stress $\tau$ occurring when the component is under load, such that the combined bond stress resulting from a superposition of said load bond stress $\tau$ and said bond stress $\tau_{ES}$ of said internal stress when a load is applied is decreased as compared to at least one maximum in the load bond stress $\tau$.

2. A method for introducing force into a component using a screw or a threaded rod, in which the screw or threaded rod has a bonding thread section that can be screwed into a component in order to form a bond with the component, said bonding thread section having a first end, which is the leading end when screwing in, and a second end, wherein the thread lead is variable and has a first local extremum in the half of the - 98.359 - bonding thread section adjacent to the second end.

3. The method according to Claim 2, in which, assuming that the length of the bonding thread section is standardised to one, the first local extremum is located at a distance of 0.6 to 0.9, preferably of 0.7 to 0.85 from the first end.

4. The method according to Claim 2 or 3, in which the thread lead has a second local extremum which is located in the half of the bonding thread section adjacent to the first end and has a curvature which is opposite to that of the first local extremum,
wherein, assuming that the length of the bonding thread section is standardised to one, the second local extremum is preferably located at a distance of 0.05 to 0.4, preferably of 0.1 to 0.3 from the first end of the bonding thread section.

5. The method according to Claim 1, in which the screw or threaded rod has a bonding thread section which can be screwed into a component in order to form a bond with the component, said bonding thread section having a first end, which is a leading end when screwing in, and a second end, wherein the thread lead, starting from a value $p_0$ at the first end, falls by a value $\Delta p$ in a section adjacent to the first end, remains below $p_0$ - $\Delta p$ in a middle section and rises above the value $p_0$ - $\Delta p$ again in a section adjacent to the second end.

6. The method according to Claim 5, in which, assuming that the length of the bonding thread section is standardised to one, the first and/or the second section has a length of between 0.07 and 0.35, preferably between 0.1 and 0.3 and particularly preferably between 0.15 and 0.25, and/or
in which the lead in the middle section varies by less than $\pm$ 0.5 $\Delta p$, preferably by less than $\pm$ 0.3 $\Delta p$.

7. The method according to one of Claims 2 to 6, in which the thread leads at the first and at second ends deviate from one another by less than 50%, preferably less than 30% and particularly preferably less than 10% of the overall variation in the thread lead in the bonding thread section.

8. A method for designing a screw or threaded rod with a varying thread lead and a bonding thread section which can be screwed into a component in order to form a bond with the component and having a first end which is a leading end when screwing in, said method comprising the following steps:

Determining a load of bond stress $\tau$ as would occur - irrespectively of the particular design of the thread - in the bond between the screw or threaded rod and a component for which the screw or threaded rod is to be used when the component is under load, and
Determining the variation of the thread lead such that the screw or threaded rod when screwed into the load-free component creates a bond stress $\tau_{ES}$ associated with the internal stress in the component that is , at least in sections, opposite to said load bond stress $\tau$ such that the combined load stress resulting from a superposition of said load bond stress $\tau$ and said bond stress $\tau_{ES}$ of said internal stress when a load is applied is decreased as compared to at least one maximum in the load bond stress $\tau$.

9. A computer program under execution of which in a data processing device a method according to Claim 8 is carried out.

10. A screw or threaded rod with a thread having a lead that varies in the longitudinal direction of the screw or threaded rod, and comprising a bonding thread section which can be screwed into the component in order to form a bond with the component, said bonding thread section having a first end, which is a leading end when screwing in, and a second end, wherein the thread lead has a first local extremum in the half of the bonding thread section adjacent to the second end.

11. The screw or threaded rod according to Claim 10, in which, assuming that the length of the bonding thread section is standardised to one, the first local extremum is located at a distance of 0.6 to 0.9, preferably of 0.7 to 0.85 from the first end.

12. The screw or threaded rod according to Claim 10 or 11, in which the thread lead has a second local extremum which is located in the half of the bonding thread section adjacent to the first end and has a curvature which is opposite to that of the first local extremum,
in which, assuming that the length of the bonding thread section is standardised to 1, the second local extremum is preferably located at a distance of 0.05 to 0.4, preferably of 0.1 to 0.3 from the first end of the bonding thread section.

13. A screw or threaded rod having a lead that varies in the longitudinal direction of the screw or threaded rod and having a bonding thread section which can be screwed into a component in order to form a bond with the component, said bonding thread section having a first end, which is a leading end when screwing in, and a second end, wherein the thread lead, starting from a value $p_0$ at the first end, drops by a value $\Delta p$ in a section adjacent to the first end, remains below $p_0 - \Delta p$ in a middle section and rises above the value $p_0 - \Delta p$ again in a section adjacent to the second end.

14. The screw or threaded rod according to Claim13, in which, assuming that the length of the bonding thread section is standardised to one, the first and/or the second section has a length of 0.07 to 0.35, preferably 0.1 to 0.3 and particularly preferably 0.15 to 0.25, and/or
in which the lead in the middle section varies by less than $\pm$ 0.5 $\Delta p$, preferably by less than $\pm$ 0.3 $\Delta p$.

15. The screw or threaded rod according to one of Claims 10 to 14, in which the thread leads at said first and at second ends deviate from one another by less than 50%, preferably less than 30% and particularly preferably by less than 10% of the overall variation in the thread lead in the bonding thread section.

**Revendications**

1. Procédé pour l'armature d'un élément de construction moyennant l'utilisation d'une vis ou d'une tige filetée, la vis ou la tige filetée possédant une partie de liaison filetée qui peut être vissée dans un élément de construction, afin de former un assemblage avec l'élément de construction, et qui possède une première extrémité assurant le vissage et une deuxième extrémité,
**caractérisé en ce que** la partie de liaison filetée possède un pas de filetage variable par lequel une répartition des contraintes propres dans l'élément de construction s'effectue dans l'élément de construction non sollicité lors du vissage et qu'une contrainte propre - contrainte d'adhésion $\tau_{ES}$ correspondante en résulte,
la contrainte propre - contrainte d'adhésion $\tau_{ES}$ d'une contrainte d'adhésion $\tau$ sous charge qui a lieu sous sollicitation de l'élément de construction étant au moins opposée sur des parties de telle sorte que la contrainte d'adhésion combinée qui résulte d'un transfert de la contrainte d'adhésion sous sollicitation $\tau$ et de la contrainte propre - contrainte d'adhésion dans le cas de la sollicitation, est diminuée par rapport à un maximum de la contrainte d'adhésion $\tau$ sous charge.

**2.** Procédé pour l'introduction de résistance dans un élément de construction moyennant l'utilisation d'une vis ou d'une tige filetée, où la vis ou la tige filetée possède une partie de liaison filetée qui peut être vissée dans un élément de construction, afin de former avec l'élément de construction un assemblage et qui possède une première extrémité pour assurer le vissage et une seconde extrémité, le pas du filetage étant variable et présentant un premier extrémum local au niveau de la moitié de la partie de liaison filetée avoisinant la seconde extrémité.

**3.** Procédé selon la revendication 2 dans lequel, en admettant que la longueur de la partie de liaison filetée est normalisée, égale à un, le premier extrémum local se situe à une distance entre 0,6 et 0,9, de préférence entre 0,7 et 0,85 de la première extrémité.

**4.** Procédé selon les revendications 2 ou 3 dans lequel le pas de filetage présente un deuxième extrémum local qui se situe dans la moitié de la partie de liaison filetée voisine de la première extrémité et présente une courbure qui est opposée à celle du premier extrémum local, où, en admettant que la longueur de la partie de liaison filetée est normalisée, égale à un, le second extrémum local se situe de préférence à une distance entre 0,05 et 0,4, de manière particulièrement préférée entre 0,1 et 0,3, de la première extrémité de la partie de liaison filetée.

**5.** Procédé selon la revendication 1 dans lequel la vis ou la tige filetée possède une partie de liaison filetée qui peut être vissée dans un élément de construction afin de former un assemblage avec l'élément de construction et qui possède une première extrémité pour assurer le vissage et une seconde extrémité, le pas du filetage partant d'une valeur $p_0$ dans la partie attenante à la première extrémité diminuant jusqu'à une valeur $\Delta p$, restant stable dans la partie médiane en-dessous de $p_0 - \Delta p$, et augmentant de nouveau au-delà d'une valeur $p_0 - \Delta p$ dans la partie attenante à la seconde extrémité.

**6.** Procédé selon la revendication 5 dans lequel, en admettant que la longueur de la partie de liaison filetée est normalisée, égale à un, la première partie et/ou la seconde partie possèdent des longueurs entre 0,07 et 0,35, de préférence entre 0,1 et 0,3 et de manière particulièrement préférée entre 0,15 et 0,25, et/ou dans lequel le pas dans la partie médiane varie de moins de $\pm$ 0,5 $\Delta p$, de préférence de moins de $\pm$ 0,3 $\Delta p$.

**7.** Procédé selon l'une des revendications de 2 à 8 dans lequel les pas de filetage à la première et à la seconde extrémité dévient l'un de l'autre de moins de 50 %, de préférence de moins de 30 % et de manière particulièrement préférée de moins de 10 % par rapport à la variation totale du pas de filetage dans la partie de liaison filetée.

**8.** Procédé pour la construction d'une vis ou d'une tige filetée à pas de filetage variables et d'une partie de liaison filetée qui peut être vissée dans un élément de construction afin de former un assemblage avec l'élément de construction et qui possède une première extrémité pour assurer le vissage et une seconde extrémité, comprenant les étapes suivantes :

détermination d'une contrainte de liaison sous sollicitation $\tau$, qui est déterminée pour une sollicitation de l'élément de construction pour lequel la vis ou la tige filetée est destinée, dans l'assemblage entre l'élément de construction et la vis ou la tige filetée, indépendamment de la réalisation proprement dite du filetage,
détermination de la variation du pas de filetage de telle sorte que la vis, respectivement la tige filetée, lorsqu'elle est vissée dans l'élément de construction non sollicité, produit une contrainte propre - contrainte d'adhésion $\tau_{ES}$, qui est au moins opposée en partie à la contrainte de liaison sous charge $\tau$ de telle sorte que la contrainte de liaison combinée, qui résulte d'un transfert de la contrainte de liaison sous charge $\tau$ et de la contrainte de liaison propre - contrainte d'adhésion $\tau_{ES}$ dans le cas d'une sollicitation est diminuée par rapport à au moins un maximum dans la contrainte de liaison sous charge $\tau$.

**9.** Programme d'ordinateur où, dans sa mise en oeuvre dans un dispositif de traitement de données, un procédé selon la revendication 8 est exécuté.

**10.** Vis ou tige filetée comprenant un filetage dont le pas varie dans le sens longitudinal de la vis ou de la tige filetée, et comprenant une partie de liaison filetée qui peut être vissée dans un élément de construction afin de former un assemblage avec l'élément de construction et qui possède une première extrémité pour assurer le vissage et une seconde extrémité, le pas de filetage sur la moitié de la partie de liaison filetée avoisinant la seconde extrémité présentant un premier extrémum local.

**11.** Vis ou tige filetée selon la revendication 10 dans laquelle, en admettant que la longueur de la partie filetée de liaison est normalisée, égale à un, le premier extrémum local se situe à une distance entre 0,6 et 0,9, de préférence entre 0,7 et 0,85 de la première extrémité.

**12.** Vis ou tige filetée selon les revendications 10 ou 11 dans laquelle le pas du filetage présente une seconde valeur extrême locale qui se situe sur la moitié de la partie de liaison filetée avoisinant la première extrémité et présente une courbure qui est opposée à sa première valeur extrême locale, pour laquelle, en admettant que la longueur de la partie filetée de liaison est normalisée égale à 1, la seconde valeur extrême locale se situe de préférence à une distance entre 0,05 et 0,4, de manière particulièrement préférée entre 0,1 et 0,3 de la première extrémité de la partie du filetage de liaison.

**13.** Vis ou tige filetée comprenant un filetage dont le pas de la vis ou de la tige filetée varie dans le sens longitudinal et qui possède une partie de liaison filetée qui peut être vissée dans un élément de construction afin de former un assemblage avec l'élément de construction et qui possède une première extrémité pour assurer le vissage et une seconde extrémité, le pas de filetage, en partant d'une partie attenante à la première extrémité diminuant d'une valeur $p_0$ à la première extrémité vers une valeur $\Delta p$, restant stable en dessous de $p_0 - \Delta p$ sur une partie médiane et augmentant de nouveau au-delà d'une valeur $p_0 - \Delta p$ sur une partie attenante à la seconde extrémité.

**14.** Vis ou tige filetée selon la revendication 13, pour laquelle, en admettant que la longueur de la partie de liaison filetée est normalisée, égale à 1, la première et/ou la seconde partie possèdent une longueur de 0,07 à 0,35, de préférence de 0,1 à 0,3 et de manière particulièrement préférée de 0,15 à 0,25, et/ou le pas dans la partie médiane varie de moins de $\pm$ 0,5 $\Delta p$, de préférence de moins de $\pm$ 0,3 $\Delta p$.

**15.** Vis ou tige filetée selon l'une des revendications de 10 à 14 dans laquelle les pas de filetage à la première extrémité et à la seconde extrémité ne dévient pas l'un de l'autre de moins de 50 %, de préférence de moins de 30 %, et de manière particulièrement préférée de moins de 10 % par rapport à la variation totale du pas de filetage dans la partie de liaison filetée.

DL: Verbundspannungen

Fig. 1

ZL: Verbundspannungen

Fig. 2

DL: Axialspannungen Bauteil

$\sigma_t(x)_0$

$\sigma_t(x)_1$

$\sigma_t(x)_2$

x

Fig. 3

ZL: Axialspannungen Bauteil

$\sigma_t(x)_0$

$\sigma_t(x)_1$

$\sigma_t(x)_2$

x

Fig. 4

Fig. 5

Fig. 6

DL: Axialspannungen Schraube

Fig. 7

ZL: Axialspannungen Schraube

Fig. 8

DL: Dehnung Schraube

Dehnung

$\varepsilon_s(x)_0$
——

$\varepsilon_s(x)_1$
- - -

$\varepsilon_s(x)_2$
- - - -

0

-5*10⁻⁴

-0.001

-0.0015

0   0.1   0.2   0.3   0.4   0.5   0.6   0.7   0.8   0.9

x

Fig. 9

ZL: Dehnung Schraube

Dehnung

$\varepsilon_s(x)_0$
——

$\varepsilon_s(x)_1$
- - -

$\varepsilon_s(x)_2$
- - - -

0.0015

0.001

5*10⁻⁴

0

0   0.1   0.2   0.3   0.4   0.5   0.6   0.7   0.8   0.9

x

Fig. 10

23

DL: Verbundspannungen aus ES

$(\tau_{ES}(x)^T)_0$

―――

$(\tau_{ES}(x)^T)_1$

- - -

$(\tau_{ES}(x)^T)_2$

― ― ―

x

Fig. 11

ZL: Verbundspannungen aus ES

$(\tau_{ES}(x)^T)_0$

―――

$(\tau_{ES}(x)^T)_1$

- - -

$(\tau_{ES}(x)^T)_2$

― ― ―

x

Fig. 12

DL: gewünschter Dehnungszustand aus Gew

$\varepsilon_{ES}(x)_0$

-------

$\varepsilon_{ES}(x)_1$

- - -

$\varepsilon_{ES}(x)_2$

- - - -

0.02

0.01

0

-0.01

0    0.1   0.2   0.3   0.4   0.5   0.6   0.7   0.8   0.9

x

Fig. 13

ZL: gewünschter Dehnungszustand aus Gew

$\varepsilon_{ES}(x)_0$

——

$\varepsilon_{ES}(x)_1$

- - -

$\varepsilon_{ES}(x)_2$

- - -

0.01

0

-0.01

-0.02

0    0.1   0.2   0.3   0.4   0.5   0.6   0.7   0.8   0.9

x

Fig. 14

DL: Axialspannungen Bauteil durch ES

$\sigma_{ES}(x)_0$

———

$\sigma_{ES}(x)_1$

- - -

$\sigma_{ES}(x)_2$

— — —

Fig. 15

ZL: Axialspannungen Bauteil durch ES

$\sigma_{ES}(x)_0$

———

$\sigma_{ES}(x)_1$

- - -

$\sigma_{ES}(x)_2$

— — —

Fig. 16

## DL: Axialspannungen Bauteil ES+Last

$\sigma_{LK}(x)_0$

———

$\sigma_{LK}(x)_1$

- - -

$\sigma_{LK}(x)_2$

- - -

Fig. 17

## ZL: Axialspannungen Bauteil ES+Last

$\sigma_{LK}(x)_0$

———

$\sigma_{LK}(x)_1$

- - -

$\sigma_{LK}(x)_2$

- - -

Fig. 18

DL: Verbundspannung aus ES+Last

$\tau_{LK}(x)_0$

———

$\tau_{LK}(x)_1$

- - -

$\tau_{LK}(x)_2$

···-··-···

x

Fig. 19

ZL: Verbundspannung aus ES+Last

$\tau_{LK}(x)_0$

———

$\tau_{LK}(x)_1$

- - -

$\tau_{LK}(x)_2$

— — —

x

Fig. 20

DL: Vergl. Verbundspannung (0) L, ES+L

$\tau(x)_0$

---

$\tau_{LK}(x)_0$

- - -

x

Fig. 21

ZL: Vergl. Verbundspannung (0) L, ES+L

$\tau(x)_0$

---

$\tau_{LK}(x)_0$

- - -

x

Fig. 22

DL: Vergl. Verbundspannung(1) L, ES+L

$\tau(x)_I$

———

$\tau_{LK}(x)_I$

- - -

Fig. 23

ZL: Vergl. Verbundspannung (1) L, ES+L

$\tau(x)_I$

———

$\tau_{LK}(x)_I$

- - -

Fig. 24

DL: Vergl. Verbundspannung (2) L, ES+L

$\tau(x)_2$
———

$\tau_{LK}(x)_2$
- - -

x

Fig. 25

ZL: Vergl. Verbundspannung (2) L, ES+L

$\tau(x)_2$
———

$\tau_{LK}(x)_2$
- - -

x

Fig. 26

DL: Veränderliche Steigung p(x)

Fig. 27

ZL: Veränderliche Steigung p(x)

Fig. 28

Fig. 29

Fig. 30

Bsp. gewünschter ES-Zustände im Bauteil

Fig. 31

Dehnungszustände durch ES

Fig. 32

Verlauf der Verbundspannungen durch ES

Fig. 33

Verlauf der veränderlichen Steigung p(x)

Fig. 34

**EP 2 174 025 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4842464 A
- US 4956888 A